# EUROPEAN PATENT APPLICATION

(11) **EP 3 107 289 A1**
(43) Date of publication of application: **21.12.2016**
(21) Application number: 15749303.2
(22) Date of filing: 16.02.2015
(51) Int. Cl.: H04N 19/103

(54) **PICTURE CODING AND DECODING METHODS AND DEVICES**

(30) Priority: 16.02.2014 CN 201410051371; 29.01.2015 CN 201510047762
(71) Applicant: Tongji University, Shanghai 200092 (CN); ZTE Corporation, Shenzhen, Guangdong 518057 (CN)
(72) Inventor: LIN, Tao, Shanghai 200092 (CN); LI, Ming, Shenzhen Guangdong 518057 (CN); SHANG, Guoqiang, Shenzhen Guangdong 518057 (CN)
(74) Representative: Novagraaf Technologies
(86) International application number: PCT/CN2015/073160
(87) International publication number: WO 2015/120818

(57) **Abstract**

Provided are methods and devices for coding or decoding an image. The coding method includes that: one coding manner is selected for predictive or matching coding of a current Coding Unit (CU), according to characteristics of pixel samples of the current CU and an adjacent CU of the current CU, from A predetermined predictive coding manners and matching coding manners including at least one predictive coding manner with different prediction characteristics and matching coding manners with mutually different matching characteristics, and the selected coding manner is determined as an optimal coding manner, wherein the A predictive coding manners and matching coding manners include: a predictive coding manner, matching coding manner 1, matching coding manner 2, ...... and matching coding manner A-1, and A is an integer more than or equal to 2; and predictive coding or matching coding is performed on the current CU by adopting the optimal coding manner. By adopting the technical solution, the problem that there is yet no technical solution which can perform high-efficiency coding or high-efficiency decoding for a screen in the related technology is solved, and a coding or decoding process may be rapidly and efficiently implemented.

## Description

### Technical Field

The present disclosure relates to the field of communication, and in particular to methods and devices for coding or decoding an image.

### Background

A common format of a digital video signal is a sequence of image (or pictures). An image is usually a rectangular area formed by a plurality of pixels, and a digital video signal is a video image sequence, which is also called a video sequence or a sequence sometimes for short, formed by dozens of and even hundreds of thousands of frames of images. Coding the digital video signal is to code frames of images (or pictures) in a certain order. The frame which is currently being coded at any time is called a current coded frame. Similarly, decoding a compressed bitstream of a digital video signal is to decode compressed bitstreams of various frames of images (or pictures) in the same order. The frame which is currently being decoded at any time is called a current decoded frame. The current coded frame or the current decoded frame is usually called a current frame.

In the latest international High Efficiency Video Coding (HEVC) standard, when an image is coded, the image is divided into a plurality of sub-images called "Coding Elements (CUs)" with MxM pixels, and the sub-images are coded one by one by taking a CU as a basic coding element. M is usually 8, 16, 32 and 64. Therefore, coding a video image sequence is to code each CU of each frame in an order. Similarly, during decoding, each CU of each frame is also decoded in the same order to finally reconstruct the whole video sequence.

In order to adapt to differences of image contents and characteristics of each part in an image, and pertinently and most effectively to perform coding, a size of each CU in the image may be different, some being 8x8, some being 64x64 and the like. In order to seamlessly splice the CUs with different sizes, the image is usually divided into "Largest Coding Units (LCUs)" with completely the same size and NxN pixels at first, and then each LCU is further divided into multiple CUs of which sizes may not be the same in a tree structure. Therefore, the LCU is also called Coding Tree Unit (CTU). For example, the image is divided into LCUs with completely the same size and 64x64 pixels (N=64) at first, wherein a certain LCU includes three CUs with 32x32 pixels and four CUs with 16x16 pixels, and in such a manner, the 7 CUs in the tree structure form a CTU; and the other LCU includes two CUs with 32x32 pixels, three CUs with 16x16 pixels and twenty CUs with 8x8 pixels, and in such a manner, the 25 CUs in the tree structure form the other CTU. Coding an image is to code CUs one by one in an order. The CU which is currently coded at any time is called a current coded CU. Decoding a frame of image is also to decode each CU in each CTU in the same order. The CU which is currently decoded at any time is called a current decoded CU. The current coded CU or the current decoded CU is usually called a current CU.

A colour pixel includes three components. Two most common pixel colour formats include a Green, Blue and Red (GBR) colour format (including a green component, a blue component and a red component) and a YUV colour format, also called a YCbCr colour format (including a luma component and two chroma components). Therefore, when a CU is coded, the CU may be divided into three component planes (a G plane, a B plane and an R plane or a Y plane, a U plane and a V plane), and the three component planes are coded respectively; and three components of each pixel may also be bundled and combined into a triple, and the whole CU formed by these triples is coded. The former pixel and component arrangement manner is called a planar format of an image (and CUs of the image), and the latter pixel and component arrangement manner is called a packed format of the image (and CUs of the image).

The YUV colour format may also be subdivided into a plurality of sub-formats according to whether to perform down-sampling on a chroma component or not: a YUV4:4:4 pixel colour format under which a pixel includes a Y component, a U component and a V component; a YUV4:2:2 pixel colour format under which two left and right adjacent pixels include two Y components, a U component and a V component; and a YUV4:2:0 pixel colour format under which four left, right, upper and lower adjacent pixels arranged according to 2x2 spatial positions include four Y components, a U component and a V component. A component is usually represented by a number of 8∼16 bits. The YUV4:2:2 pixel colour format and the YUV4:2:0 pixel colour format are both obtained by executing chroma component down-sampling on the YUV4:4:4 pixel colour format. A pixel component is also called a pixel sample, or is simply called a sample.

Except the abovementioned three-component representation formats of a pixel, another commonly used representation format of a pixel in a related art is a palette index representation format. In the palette index representation format, a numerical value of one pixel may be indicated by an index of a palette. Numerical values or approximate numerical values of three components of a pixel to be indicated are stored in a palette space, and an address of the palette is called an index of the pixel stored in the address. One index can represent one component of a pixel, alternatively, one index may also represent three components of a pixel. There may be one or more palettes. Under a multi-palette condition, a complete index practically consists of two parts, i.e. a palette number and an index of a palette corresponding to the palette number. The index representation format of a pixel refers to indicating the pixel with an index. The index representation format of a pixel is also called an indexed colour or pseudo colour representation format of the pixel in the related art, or is usually called an indexed pixel or a pseudo pixel, or a pixel index or an index directly. The index is also called an exponent sometimes. The procedure of indicating a pixel in the index representation format is also called indexing or exponentiation. A three-component representation format of one pixel may be converted into a palette index through a palette, and the palette index is coded, so that coding efficiency is improved in a manner of reducing an original data volume. At a decoder, the palette index obtained by decoding is converted into the three-component representation format of the pixel. In a coding process, an adopted palette may be adaptively generated according to a characteristic of a coding area, and necessary information for the decoder to obtain the palette (a table about a corresponding relationship between a colour component group and an index sequence number) and recover the video according to the palette is written into a bitstream. Such a coding and decoding manner is called a palette manner.

Along with development and popularization of a new-generation cloud computing and information processing mode and platform adopting a remote desktop as a typical representation form, interconnection among multiple computers, between a computer host and other digital equipment such as a smart television, a smart phone and a tablet personal computer and among various digital equipment has been realized and increasingly becomes a mainstream trend. Therefore, there is an urgent need for real-time screen transmission from a server (cloud) to a user at present. Since a large volume of screen video data is desired to be transmitted, effective and high-quality data compression for a computer screen image is inevitable.

Fully utilizing the characteristic of a computer screen image, an ultrahigh-efficiency compression on the computer screen image is a main aim of the latest international HEVC standard.

An outstanding characteristic of a computer screen image is that there may usually be many similar and even completely the same pixel patterns in the same image. For example, Chinese or foreign characters usually appearing in computer screen images consist of a few types of basic strokes, and many similar or same strokes may be found in the same image. Common menus, icons and the like in computer screen images also have many similar or same patterns. In an intra-prediction manner adopted for an image and video compression technology of the related art, only an adjacent pixel sample is taken as a reference, and similarity or sameness in the one image can not be utilized to improve compression efficiency. In an intra-motion compensation manner, also called an intra-block copy manner, in a related art, intra-block matching coding can be implemented by adopting blocks with several fixed sizes (8x8, 16x16, 32x32 and 64x64 pixels), however, fine matching adopting various sizes and shapes cannot be achieved. Although fine matching of various sizes and shapes can be effectively implemented by several other matching manners, such as a micro-block matching manner, fine division matching manner, string matching manner and palette manner in related arts, more parameters are required to represent fine matching of various sizes and shapes under some image conditions, and there also exist the problems of high complexity, large calculated amount, great memory read-write bandwidth and the like.

It is important to note that the block matching decoding manner and the string matching decoding manner may also be called a block copy decoding manner and a string copy decoding manner respectively.

For the problem that there is yet no technical solution which can perform high-efficiency coding or high-efficiency decoding for a screen in a related technology, there is yet no effective solution.

### Summary

In order to solve the technical problem, the embodiments of the present disclosure provide methods and devices for coding or decoding an image.

According to an embodiment of the present disclosure, a method for coding an image is provided, which may include: step 1): one coding manner is selected for predictive or matching coding of the current CU, according to characteristics of pixel samples of a current CU and an adjacent CU of the current CU, from A predetermined predictive coding manners and matching coding manners including at least one predictive coding manner with different prediction characteristics and matching coding manners with mutually different matching characteristics, and the selected coding manner is determined as an optimal coding manner, wherein the A predictive coding manners and matching coding manners may include: a predictive coding manner, matching coding manner 1, matching coding manner 2, ...... and matching coding manner A-1, and A may be an integer more than or equal to 2; and step 2): predictive coding or matching coding is performed on the current CU by adopting the optimal coding manner.

In an exemplary embodiment, a value of A may be selected from a set {3,4,5}, wherein, when A is equal to 4, the 4 coding manners may include: the predictive coding manner, a block matching coding manner, a string matching coding manner and a palette coding manner (also called a palette matching manner); and when A is equal to 3, the 3 coding manners may include: the predictive coding manner, the block matching coding manner and the string matching coding manner.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N may be an integer more than 2.

In an exemplary embodiment, a value of the predictive and matching manner identification code may include at least one of: 0, 1, 2, ...... and A-1, wherein it is indicated that the predictive coding manner is adopted for the current CU when the predictive and matching manner identification code is 0, it is indicated that matching coding manner 1 is adopted for the current CU when the predictive and matching manner identification code is 1, it is indicated that matching coding manner 2 is adopted for the current CU when the predictive and matching manner identification code is 2, ......, and it is indicated that matching coding manner A-1 is adopted for the current CU when the predictive and matching manner identification code is A-1.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 and/or displacement vector 1; or index map 1, unmatched pixel sample 1, motion vector 2 and/or displacement vector 2; or index map 2, unmatched pixel sample 2, ······, motion vector N and/or displacement vector N; or index map N and unmatched pixel sample N; and
predictive residuals or matching residuals, wherein N may be an integer more than 2.

In an exemplary embodiment, a value of the predictive and matching manner identification code may include at least one of: 0, 1, 2 and 3, wherein it is indicated that the predictive coding manner is adopted for the current CU when the predictive and matching manner identification code is 0, it is indicated that the block matching coding manner is adopted for the current CU when the predictive and matching manner identification code is 1, it is indicated that the string matching coding manner is adopted for the current CU when the predictive and matching manner identification code is 2, and it is indicated that the palette coding manner is adopted for the current CU when the predictive and matching manner identification code is 3.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 and/or displacement vector 1, unmatched pixel sample 1, motion vector 2 and/or displacement vector 2, unmatched pixel sample 2, ......, motion vector N and/or displacement vector N and unmatched pixel sample N; and
predictive residuals or matching residuals, wherein N may be an integer more than 2.

In an exemplary embodiment, a value of the predictive and matching manner identification code may include at least one of: 0, 1 and 2, wherein it is indicated that the predictive coding manner is adopted for the current CU when the predictive and matching manner identification code is 0, it is indicated that the block matching coding manner is adopted for the current CU when the predictive and matching manner identification code is 1, and it is indicated that the string matching coding manner is adopted for the current CU when the predictive and matching manner identification code is 2.

In an exemplary embodiment, a position of the CU header in the syntax elements may fixedly be the first in the syntax elements, and positions of the other syntax elements in a bitstream may be determined according to a predetermined arrangement sequence, wherein the other syntax elements are syntax elements except the CU header in the syntax elements.

In an exemplary embodiment, for any syntax element among the syntax elements, the syntax element may be split into multiple parts, and the multiple parts may be placed at the same position or different positions of a bitstream.

In an exemplary embodiment, after step 2), the method may further include: step 3): subsequent coding operation, reconstruction operation and entropy coding operation are performed on the current CU.

According to another embodiment of the present disclosure, a method for decoding an image is further provided, which may include: step 1): entropy decoding is performed on an input bitstream, data information obtained by entropy decoding is parsed, and one decoding manner is selected for predictive or matching decoding of a current CU from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A may be an integer more than or equal to 2; and step 2): predictive decoding operation or matching decoding operation is performed on the current CU according to the selected predictive decoding manner or matching decoding manner.

In an exemplary embodiment, a value of A may be selected from a set {3,4,5}, wherein, when A is equal to 4, the 4 decoding manners may include: a predictive decoding manner, a block copy decoding manner, a string copy decoding manner and a palette decoding manner; and when A is equal to 3, the 3 decoding manners may include: the predictive decoding manner, the block copy decoding manner and the string copy decoding manner.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N may be an integer more than 2.

In an exemplary embodiment, a value of the predictive and matching manner identification code may include at least one of: 0, 1, 2, ...... and A-1, wherein it is indicated that the predictive decoding manner is adopted for the current CU when the predictive and matching manner identification code is 0, it is indicated that matching decoding manner 1 is adopted for the current CU when the predictive and matching manner identification code is 1, it is indicated that matching decoding manner 2 is adopted for the current CU when the predictive and matching manner identification code is 2, ......, and it is indicated that matching decoding manner A-1 is adopted for the current CU when the predictive and matching manner identification code is A-1.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 and/or displacement vector 1; or index map 1, unmatched pixel sample 1, motion vector 2 and/or displacement vector 2; or index map 2, unmatched pixel sample 2, ······, motion vector N and/or displacement vector N; or index map N and unmatched pixel sample N; and
predictive residuals or matching residuals, wherein N may be an integer more than 2.

In an exemplary embodiment, a value of the predictive and matching manner identification code may include at least one of: 0, 1, 2 and 3, wherein it is indicated that the predictive decoding manner is adopted for the current CU when the predictive and matching manner identification code is 0, it is indicated that the block copy decoding manner is adopted for the current CU when the predictive and matching manner identification code is 1, it is indicated that the string copy decoding manner is adopted for the current CU when the predictive and matching manner identification code is 2, and it is indicated that the palette decoding manner is adopted for the current CU when the predictive and matching manner identification code is 3.

In an exemplary embodiment, the current CU and the adjacent CU may consist of syntax elements, wherein the syntax elements may include the following information:
a CU header, a predictive and matching manner identification code and a predictive mode or a matching mode;
motion vector 1 or displacement vector 1; or position vector 1 and matching length 1, unmatched pixel sample 1, motion vector 2 or displacement vector 2; or position vector 2 and matching length 2, unmatched pixel sample 2, ······, motion vector N and/or displacement vector N; or position vector N and matching length N, and unmatched pixel sample N; and
predictive residuals or matching residuals, wherein N may be an integer more than 2.

In an exemplary embodiment, a value of the predictive and matching manner identification code may include at least one of: 0, 1 and 2, wherein it is indicated that the predictive decoding manner is adopted for the current CU when the predictive and matching manner identification code is 0, it is indicated that the block copy decoding manner is adopted for the current CU when the predictive and matching manner identification code is 1, and it is indicated that the string copy decoding manner is adopted for the current CU when the predictive and matching manner identification code is 2.

In an exemplary embodiment, the current CU and the adjacent CU may consist of syntax elements, wherein the syntax elements may include the following information:
a CU header, a predictive and matching manner flag bit, a predictive and matching manner identification code or a predictive and matching manner partial identification code; or blank, a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N may be an integer more than 2.

In an exemplary embodiment, the method may further include that: when the predictive and matching manner flag bit is 0, it is indicated that syntax elements forming CUs of the bitstream include one of: a predictive and matching manner partial identification code which is not blank; and a predictive and matching manner partial identification code which is blank; and when the predictive and matching manner flag bit is 1, it is indicated that syntax elements forming CUs of the bitstream include the predictive and matching manner identification code.

In an exemplary embodiment, the method may further include that: when the syntax elements forming the CUs of the bitstream include a predictive and matching manner partial identification code and the predictive and matching manner partial identification code is not blank, the decoding manner adopted for the current CU is determined according to the predictive and matching manner partial identification code and an evaluation result of the characteristics of the pixel samples of the current CU and the adjacent CU; and when the syntax elements forming the CUs of the bitstream include a predictive and matching manner partial identification code and the predictive and matching manner partial identification code is blank, the decoding manner adopted for the current CU is determined according to the evaluation result of the characteristics of the pixel samples of the current CU and the adjacent CU.

In an exemplary embodiment, the current CU and the adjacent CU may consist of syntax elements, wherein the syntax elements may include the following information:
a CU header, a predictive and matching manner flag bit or blank, a predictive and matching manner identification code or a predictive and matching manner partial identification code; or blank, a predictive or matching mode flag bit, a predictive or matching mode identification code or a predictive or matching mode partial identification code or blank;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N may be an integer more than 2.

In an exemplary embodiment, when the predictive and matching manner flag bit is blank, the predictive and matching manner flag bit may be set to be a preset fixed value; when a value of the predictive or matching mode flag bit is 1, it is indicated that syntax elements forming CUs of the bitstream include the predictive and matching mode identification code, and the decoding manner for the current CU is determined according to a value corresponding to the predictive and matching mode identification code; and when the value of the predictive or matching mode flag bit is 0, it is indicated that syntax elements forming CUs of the bitstream include a predictive and matching mode partial identification code which is not blank, or include a predictive and matching mode partial identification code which is blank.

In an exemplary embodiment, the method may further include that: when the syntax elements forming the CUs of the bitstream include a predictive and matching mode partial identification code and the predictive and matching mode partial identification code is not blank, the decoding manner adopted for the current CU is determined according to the predictive and matching mode partial identification code and an evaluation result of the characteristics of the pixel samples of the current CU and the adjacent CU; and when the syntax elements forming the CUs of the bitstream include a predictive and matching mode partial identification code and the predictive and matching mode partial identification code is blank, the decoding manner adopted for the current CU is determined according to the evaluation result of the characteristics of the pixel samples of the current CU and the adjacent CU.

In an exemplary embodiment, the current CU and the adjacent CU may consist of syntax elements, wherein the syntax elements may include the following information:
a CU header, a predictive and matching manner flag bit or blank, a predictive and matching manner identification code or a predictive and matching manner partial identification code; or blank, the predictive or matching mode flag bit or blank, the predictive or matching mode identification code or the predictive or matching mode partial identification code or blank;
motion vector 1 and/or displacement vector 1; or index map 1, unmatched pixel sample 1, motion vector 2 and/or displacement vector 2; or index map 2, unmatched pixel sample 2, ······, motion vector N and/or displacement vector N; or index map N and unmatched pixel sample N; and
predictive residuals or matching residuals, wherein N may be an integer more than 2.

In an exemplary embodiment, when the predictive and matching manner flag bit is not blank, a value of the predictive and matching manner flag bit may be set to be 0 or 1; when the predictive and matching manner flag bit is blank, the value of the predictive and matching manner flag bit may be set to be a preset fixed value; when the predictive and matching mode flag bit is not blank, a value of the predictive and matching mode flag bit may be set to be 0 or 1; and when the predictive and matching mode flag bit is blank, the value of the predictive and matching mode flag bit may be set to be a preset fixed value.

In an exemplary embodiment, a position of the CU header in the syntax elements may fixedly be the beginning of the CU in the syntax elements, and positions of the other syntax elements in the bitstream may be determined according to a predetermined arrangement sequence, wherein the other syntax elements are syntax elements except the CU header in the syntax elements.

In an exemplary embodiment, for any syntax element among the syntax elements, the syntax element may be split into multiple parts, and the multiple parts may be placed at the same position or different positions of a bitstream.

According to another embodiment of the present disclosure, a method for coding an image is further provided, which may include that: characteristics of pixel samples of a coding block and an adjacent block of the coding block are analyzed; an optimal coding manner applicable to the coding block is determined according to an analysis result; and the coding block is coded according to the optimal coding manner.

In an exemplary embodiment, the step that the characteristics of the coding block and the adjacent block of the coding block are analyzed may include that: the characteristics of the coding block are analyzed to obtain palette parameters of the coding block; and characteristics of partially or completely reconstructed pixel samples in the adjacent block are analyzed according to the palette parameters to obtain the analysis result.

In an exemplary embodiment, the step that the characteristics of the partially or completely reconstructed pixel samples in the adjacent block are analyzed according to the palette parameters to obtain the analysis result may include that: the reconstructed pixel samples are converted according to the palette parameters, values of palette indices are obtained, and the values of palette indices are determined as the analysis result.

In an exemplary embodiment, the step that the characteristics of the coding block and the adjacent block of the coding block are analyzed to obtain the analysis result may include that: the partially or completely reconstructed pixel samples in the adjacent block are acquired, and copy values of the reconstructed pixel samples are determined as the analysis result.

In an exemplary embodiment, the step that the optimal coding manner applicable to the coding block is determined according to the analysis result may include that: the optimal coding manner applicable to the coding block is determined from multiple coding manners, wherein the multiple coding manners may include at least one of: a predictive coding manner, a block matching coding manner, a string matching coding manner and a palette coding manner.

In an exemplary embodiment, when the optimal coding manner is the palette coding manner, the step that the coding block is coded according to the optimal coding manner may include that: the coding block is coded according to the palette parameters and the analysis result.

In an exemplary embodiment, after the step that the coding block is coded according to the palette parameters and the analysis result, the method may further include that: palette decoding parameters including the palette parameters are written into a bitstream corresponding to the coding block.

According to another embodiment of the present disclosure, a method for decoding an image is further provided, which may include that: a received bitstream is parsed to obtain decoding parameters of a decoding block in the bitstream; characteristics of an adjacent block of the decoding block are analyzed; and the decoding block is decoded according to a decoding manner determined according to the decoding parameters and an analysis result of the adjacent block.

In an exemplary embodiment, when the decoding parameters include parameters for palette decoding manner, the step that characteristics of the adjacent block of the decoding block are analyzed may include that: characteristics of partially or completely reconstructed pixel samples in the adjacent block are analyzed to obtain the analysis result, and values of palette indices obtained by converting the reconstructed pixel samples according to the parameters for palette decoding manner or copy values of the reconstructed pixel samples are determined as the analysis result.

In an exemplary embodiment, the step that the decoding block is decoded according to the decoding manner determined according to the decoding parameters and the analysis result may include that: the decoding block is decoded according to the analysis result by using the decoding manner indicated by the parameters for palette decoding manner.

In an exemplary embodiment, the decoding manner may include at least one of: a predictive decoding manner, a block copy decoding manner, a string copy decoding manner and a palette decoding manner.

According to another embodiment of the present disclosure, a device for coding an image is further provided, which may include: a selection module, configured to select, according to characteristics of pixel samples of a current CU and an adjacent CU of the current CU, one coding manner for predictive or matching coding of the current CU from A predetermined predictive coding manners and matching coding manners including at least one predictive coding manner with different prediction characteristics and matching coding manners with mutually different matching characteristics, and determine the selected coding manner as an optimal coding manner, wherein the A predictive coding manners and matching coding manners may include: a predictive coding manner, matching coding manner 1, matching coding manner 2, ...... and matching coding manner A-1, and A may be an integer more than or equal to 2; and a coding module, configured to perform predictive coding or matching coding on the current CU by adopting the optimal coding manner.

In an exemplary embodiment, for coding manner selection of the selection module: a value of A may be selected from a set {3,4,5}, wherein, when A is equal to 4, the 4 coding manners may include: the predictive coding manner, a block matching coding manner, a string matching coding manner and a palette coding manner; and when A is equal to 3, the 3 coding manners may include: the predictive coding manner, the block matching coding manner and the string matching coding manner.

According to another embodiment of the present disclosure, a device for decoding an image is further provided, which may include: an acquisition module, configured to perform entropy decoding on an input bitstream, and parse data information obtained by entropy decoding; a selection module, configured to select one decoding manner for predictive or matching decoding of a current CU from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A may be an integer more than or equal to 2; and a decoding module, configured to perform predictive decoding operation or matching decoding operation on the current CU according to the selected predictive decoding manner or matching decoding manner.

In an exemplary embodiment, for decoding manner selection of the selection module: a value of A may be selected from a set {3,4,5}, wherein, when A is equal to 4, the 4 decoding manners may include: a predictive decoding manner, a block copy decoding manner, a string copy decoding manner and a palette decoding manner; and when A is equal to 3, the 3 decoding manners may include: the predictive decoding manner, the block copy decoding manner and the string copy decoding manner.

According to another embodiment of the present disclosure, a device for coding an image is further provided, which may include: an analysis module, configured to perform characteristic analysis on pixel samples of a coding block and an adjacent block of the coding block; a determination module, configured to determine an optimal coding manner applicable to the coding block according to an analysis result; and a coding module, configured to code the coding block according to the optimal coding manner.

In an exemplary embodiment, the analysis module may include: an acquisition unit, configured to perform characteristic analysis on the coding block to obtain palette parameters of the coding block; and an analysis unit, configured to analyze characteristics of partially or completely reconstructed pixel samples in the adjacent block according to the palette parameters to obtain the analysis result.

In an exemplary embodiment, the analysis unit may include: a conversion subunit, configured to convert the reconstructed pixel samples according to the palette parameters; and an acquisition subunit, configured to obtain values of palette indices and determine the values of palette indices as the analysis result.

In an exemplary embodiment, the acquisition unit may further be configured to acquire the partially or completely reconstructed pixel samples in the adjacent block, and determine copy values of the reconstructed pixel samples as the analysis result.

In an exemplary embodiment, the determination module may further be configured to determine the optimal coding manner applicable to the coding block from multiple coding manners, wherein the multiple coding manners may include at least one of: a predictive coding manner, a block matching coding manner, a string matching coding manner and a palette coding manner.

In an exemplary embodiment, when the optimal coding manner is the palette coding manner, the coding module may further be configured to code the coding block according to the palette parameters and the analysis result.

In an exemplary embodiment, the device may further include: a writing module, configured to write palette decoding parameters including the palette parameters into a bitstream corresponding to the coding block.

According to another embodiment of the present disclosure, a device for decoding an image is further provided, which may include: a parsing module, configured to parse a received bitstream to obtain decoding parameters of a decoding block in the bitstream; an analysis module, configured to analyze characteristics of an adjacent block of the decoding block; and a decoding module, configured to decode the decoding block according to a decoding manner determined according to the decoding parameters and an analysis result.

In an exemplary embodiment, when the decoding parameters include parameters for palette decoding manner, the analysis module may further be configured to analyze characteristics of partially or completely reconstructed pixel samples in the adjacent block to obtain the analysis result, wherein values of palette indices obtained by converting the reconstructed pixel samples according to the parameters for palette decoding manner or copy values of the reconstructed pixel samples are determined as the analysis result.

In an exemplary embodiment, the decoding module may further be configured to decode the decoding block according to the analysis result by the decoding manner indicated by the parameters for palette decoding manner.

According to the embodiments of the present disclosure, the technical solution of judging a coding manner which is the most proper for a current unit to be coded according to characteristics of pixel samples of the current CU to be coded and an adjacent unit of the CU is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for coding an image according to an embodiment of the present disclosure;
Fig. 2 is a structure block diagram of a device for coding an image according to an embodiment of the present disclosure;
Fig. 3 is a flowchart of a method for decoding an image according to an embodiment of the present disclosure;
Fig. 4 is a structure block diagram of a device for decoding an image according to an embodiment of the present disclosure;
Fig. 5 is another flowchart of a method for coding an image according to an embodiment of the present disclosure;
Fig. 6 is another structure block diagram of a device for coding an image according to an embodiment of the present disclosure;
Fig. 7 is another structure block diagram of a device for coding an image according to an embodiment of the present disclosure;
Fig. 8 is another flowchart of a method for decoding an image according to an embodiment of the present disclosure;
Fig. 9 is another structure block diagram of a device for decoding an image according to an embodiment of the present disclosure;
Fig. 10 is a flowchart of a coding method according to an embodiment of the present disclosure;
Fig. 11 is a flowchart of a decoding method according to an embodiment of the present disclosure;
Fig. 12 is a flowchart of 4 coding manners according to exemplary embodiment 1 of the present disclosure; and
Fig. 13 is a flowchart of 4 decoding manners according to exemplary embodiment 2 of the present disclosure.

### Detailed Description of the Embodiments

The present disclosure will be described below with reference to the drawings and embodiments. It is important to note that the embodiments in the present disclosure and characteristics in the embodiments may be combined under the condition of no conflicts.

Other characteristics and advantages of the embodiments of the present disclosure will be elaborated in the subsequent specification, and moreover, partially become obvious from the specification, or is understood by implementation of the present disclosure. A purpose and other advantages of the present disclosure may be achieved and obtained by structures specifically indicated in the provided specification, claims and drawings.

In order to make those skilled in the art understand the solutions of the present disclosure better, the technical solutions in the embodiments of the present disclosure will be clearly and completely described below with reference to the drawings in the embodiments of the present disclosure, and obviously, the described embodiments are not all embodiments but only a part of embodiments of the present disclosure. All other embodiments implemented by those skilled in the art based on the embodiments of the present disclosure without any creative work shall fall within the scope of protection of the present disclosure.

In the related technology, predictive coding manners and matching coding manners (including a block matching manner, a micro-block matching manner, a fine division matching manner, a string matching manner and a palette manner) have the similarity that: a plurality of proper pixel samples (called matching reference samples) in adjacent or historical pixel samples (called reference pixel sample sets or reference pixel sample storage spaces) which have been coded, decoded and reconstructed are adopted to approximately or accurately match (namely represent) pixel samples (called matched current samples) currently in coding or decoding, and a relationship between the matching reference samples and the matched current samples is recorded with a plurality of parameters and variables (called matching relationship parameters) and transmitted through a bitstream, so that the matched current samples can be obtained by the reference pixel sample sets and the matching relationship parameters at a decoder.

Furthermore, the essential difference of each predictive coding manner and matching coding manner is mainly determined by the following 4 factors: 1) a size of a minimum matching unit, i.e. value ranges of N and M when the minimum matching unit indicates NxM samples; 2) a structure and size of a reference pixel sample set; 3) a shape of a matching reference sample and a shape of a matched current sample; and 4) a distance between the matching reference sample and the matched current sample or a distance between the matching reference sample and a current CU. Characteristics of some predictive coding manners (also called predictive manners) and matching coding manners about the 4 factors are listed in Table 1 as follows.

**Table 1**

| | | | | |
|---|---|---|---|---|
| Commonly used name | Value ranges of N and M | Structures and sizes of reference pixel sample sets | Shapes of matching reference samples and shapes of matched current samples | Distances between matching reference samples and matched current samples or current CU |
| Predictive manner | N≥4 | Samples in an upper row and left column of a current CU, smaller than 300 pixel samples (intra) | The matching reference samples are samples in a row or a column, and the matched current samples are blocks with NxM samples (intra) | Outside the current CU but directly adjacent (intra) |
| | M≥4 | | | |
| | | A plurality of frames of images which have been coded or decoded before a current frame, hundreds of and even hundreds of millions of pixel samples (inter) | The matching reference samples are blocks larger than NxM, and the matched current samples are blocks with NxM samples (inter) | Located outside the current frame (inter) |
| Block matching manner | N≥4 | A plurality of CUs which have been coded or decoded in a current frame, thousands of and even millions of pixel samples | The matching reference samples and the matched current samples are blocks with the same size of NxM samples, and a CU is divided into blocks with the same size of NxM samples | There are no definitional limits to the distances between the matching reference sample blocks and the matched current sample blocks |
| | M≥4 | | | |
| Micro-block matching manner | 2≤N<4 and M is random, or N is random and 2≤M <4 | | | |
| Fine division matching manner | 2≤N≤8 | | The matching reference samples and the matched current samples are blocks with the same size of NxM samples, and a CU is divided into K blocks with the same size of NxM samples, K≤4 | |
| | 2≤M≤8 | | | |
| String matching manner | N=M=1 | Samples (including unmatched samples) which have been subjected to matching operation in a plurality of CUs which have been coded or decoded and the current CU, thousands of and even millions of pixel samples | The matching reference samples and the matched current samples are sample strings with the same length, and the length of the strings is a value capable of implementing optimal matching, and is usually between 2 and 300 | There are no definitional limits to the distances between the matching reference sample strings and the matched current sample strings |
| Palette manner | | A plurality of pixels in the current CU, called a palette, wherein each pixel is indicated by an index, smaller than 300 pixel samples | The matching reference samples are any pixels in the palette, and the matched current samples are any pixels of the current CU, and may have any shape | The distances may not exceed a maximum distance between the pixels in the current CU |

From Table 1, it can be seen that one of the most fundamental differences between the predictive and matching manners is the size of the adopted minimum matching unit. Adoption of a large minimum matching unit has the advantage that there are not so many matching relationship parameters (such as displacement vectors) and bit consumption is low because a CU is only required to be divided into a few minimum matching units (usually 1 to 4) for matching operation, but also has the shortcomings that matching accuracy may not be so high, matching residuals may be greater and more bits may also be consumed. On the other hand, adoption of a small minimum matching unit has the advantages of high matching accuracy, low matching residuals and low bit consumption, but has the shortcoming that there may be many matching relationship parameters (such as displacement vectors) and bit consumption may also be high because a CU is required to be divided into multiple minimum matching units (there may be tens and even dozens) for matching operation. Therefore, whether a higher compression rate may be achieved by adopting a large minimum matching unit or a small minimum matching unit all depends on a property of an image. If there are larger repeated patterns in an image, adopting a large minimum matching unit may achieve higher coding efficiency, and if there are fine small repeated patterns in the image, adopting a small minimum matching unit may achieve higher coding efficiency. Therefore, a higher compression rate may be achieved generally by combining multiple predictive manners and matching manners with different prediction and matching characteristics, particularly with different minimum matching units, for CU-level adaptive coding and decoding.

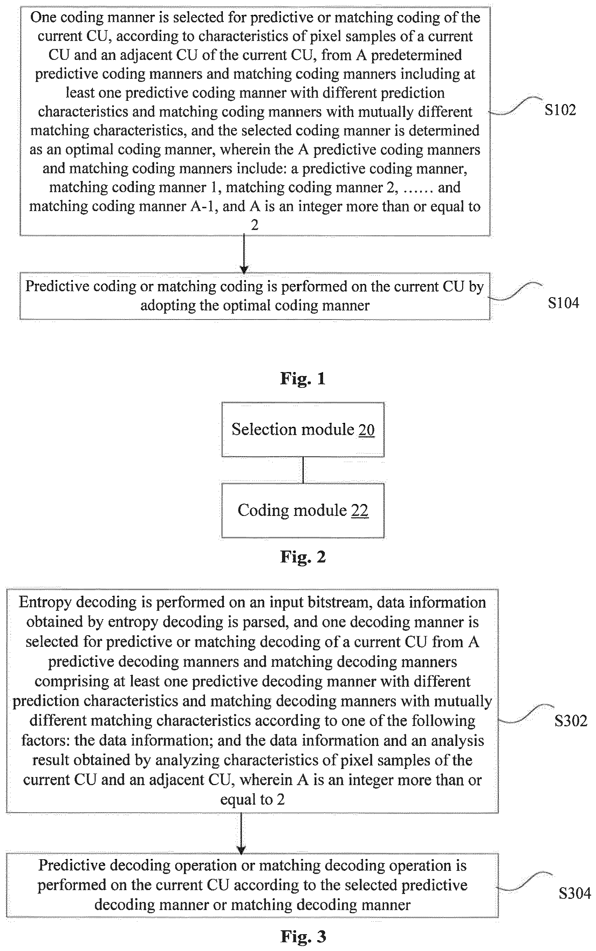

In order to solve the technical problem, the embodiment provides a method for coding an image. Fig. 1 is a flowchart of a method for coding an image according to an embodiment of the present disclosure, and as shown in Fig. 1, the method includes the following steps:
Step S102: one coding manner is selected for predictive or matching coding of the current CU, according to characteristics of pixel samples of a current CU and an adjacent CU of the current CU, from A predetermined predictive coding manners and matching coding manners including at least one predictive coding manner with different prediction characteristics and matching coding manners with mutually different matching characteristics, and the selected coding manner is determined as an optimal coding manner, wherein the A predictive coding manners and matching coding manners include: a predictive coding manner, matching coding manner 1, matching coding manner 2, ...... and matching coding manner A-1, and A may be an integer more than or equal to 2; and
Step S104: predictive coding or matching coding is performed on the current CU by adopting the optimal coding manner.

By each of the abovementioned steps, the technical solution of judging a coding manner which is the most proper for a current unit to be coded according to characteristics of pixel samples of the current CU to be coded and an adjacent unit of the CU and further coding the current CU according to the determined optimal coding manner is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

That is, according to the technical solution provided by the embodiment of the present disclosure, the A predictive coding manners and matching coding manners with different prediction and matching characteristics are predetermined, and when the current CU is coded, the characteristics of the current CU and the adjacent CU are analytically evaluated by adopting a preset analytical evaluation method and criterion, and one of the A predictive coding manners and matching coding manners is selected for predictive coding or matching coding of the current CU according to an analytical evaluation result, so that multiple predictive manners and matching manners with different prediction and matching characteristics are combined for CU-level adaptive coding and decoding.

A value of A is selected from a set {3,4,5}, wherein, when A is equal to 4, the 4 coding manners include: the predictive coding manner, a block matching coding manner, a string matching coding manner and a palette coding manner; and when A is equal to 3, the 3 coding manners include: the predictive coding manner, the block matching coding manner and the string matching coding manner. Of course, the optimal coding manner finally determined in a practical application process may also be a combination of the coding manners, for example: a matching manner mixing the string matching coding manner and the palette coding manner.

In a practical process, there may be the following main conditions for determining the optimal coding manner according to the characteristics of the pixel samples of the current CU and the adjacent CU, it is important to note that the characteristics of the pixel samples in the embodiment of the present disclosure refer to: relevance between pixels in an image and complexity of the pixels (whether including multiple colors or not, luminance of each color, the number of different colors in an area, whether the colors may be clustered into a plurality of representative colors or not, the number of the representative colors, errors between each pixel and the representative colors and a distribution condition thereof), and all solutions capable of reflecting the characteristics of the pixel samples shall fall within the scope of protection of "the characteristics of the pixel samples" in the embodiment of the present disclosure, and in addition, a syntax element composition mentioned hereinafter is only an example, and any technical solution conceivable based on the inventive concept of the embodiment of the present disclosure shall fall within the scope of protection of the embodiment of the present disclosure.

### First condition

The current CU and the adjacent CU consist of syntax elements, wherein the syntax elements include the following information:
a CU header, a predictive and matching manner identification code and a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N is an integer more than 2.

It is important to note that "......" in the embodiment of the present disclosure indicates that motion vector or matching position, and unmatched pixel sample are cycled as a whole, and "......" conditions in the following embodiment are similar, and will not be elaborated in the embodiment of the present disclosure.

In the embodiment, a value of the predictive and matching manner identification code includes at least one of: 0, 1, 2, ...... and A-1, wherein it is indicated that the predictive coding manner is adopted for the current CU when the predictive and matching manner identification code is 0, it is indicated that matching coding manner 1 is adopted for the current CU when the predictive and matching manner identification code is 1, it is indicated that matching coding manner 2 is adopted for the current CU when the predictive and matching manner identification code is 2, ......, and it is indicated that matching coding manner A-1 is adopted for the current CU when the predictive and matching manner identification code is A-1.

### Second condition

The current CU and the adjacent CU consist of syntax elements, wherein the syntax elements include the following information:
a CU header, a predictive and matching manner identification code and a predictive mode or a matching mode;
motion vector 1 and/or displacement vector 1; or index map 1, unmatched pixel sample 1, motion vector 2 and/or displacement vector 2; or index map 2, unmatched pixel sample 2, ······, motion vector N and/or displacement vector N; or index map N and unmatched pixel sample N; and
predictive residuals or matching residuals, wherein N is an integer more than 2.

In the embodiment, a value of the predictive and matching manner identification code includes at least one of: 0, 1, 2 and 3, wherein it is indicated that the predictive coding manner is adopted for the current CU when the predictive and matching manner identification code is 0, it is indicated that the block matching coding manner is adopted for the current CU when the predictive and matching manner identification code is 1, it is indicated that the string matching coding manner is adopted for the current CU when the predictive and matching manner identification code is 2, and it is indicated that the palette coding manner is adopted for the current CU when the predictive and matching manner identification code is 3.

### Third condition

The current CU and the adjacent CU consist of syntax elements, wherein the syntax elements include the following information:
a CU header, a predictive and matching manner identification code and a predictive mode or a matching mode;
motion vector 1 and/or displacement vector 1, unmatched pixel sample 1, motion vector 2 and/or displacement vector 2, unmatched pixel sample 2, ......, motion vector N and/or displacement vector N and unmatched pixel sample N; and
predictive residuals or matching residuals, wherein N is an integer more than 2.

In the embodiment, a value of the predictive and matching manner identification code includes at least one of: 0, 1 and 2, wherein it is indicated that the predictive coding manner is adopted for the current CU when the predictive and matching manner identification code is 0, it is indicated that the block matching coding manner is adopted for the current CU when the predictive and matching manner identification code is 1, and it is indicated that the string matching coding manner is adopted for the current CU when the predictive and matching manner identification code is 2.

It is important to note that a position of the CU header in the syntax elements is fixedly the first in the syntax elements, and positions of the other syntax elements in a bitstream are determined according to a predetermined arrangement sequence, wherein the other syntax elements are syntax elements except the CU header in the syntax elements. Moreover, for any syntax element among the syntax elements, the syntax element is split into multiple parts, and the multiple parts are placed at the same position or different positions of a bitstream.

In the embodiment of the present disclosure, after the technical solution of Step S104 is executed, the following technical solution may further be executed: subsequent coding operation, reconstruction operation and entropy coding operation are performed on the current CU.

The embodiment further provides a device for coding an image, which is configured to implement the abovementioned embodiment and exemplary implementation mode, what has been described will not be elaborated, and modules involved in the device will be described below. For example, term "module", used below, is a combination of software and/or hardware capable of realizing a preset function. The device described in the following embodiment is preferably implemented by software, but implementation of the device with hardware or the combination of software and hardware is also possible and conceivable. Fig. 2 is a structure block diagram of a device for coding an image according to an embodiment of the present disclosure. As shown in Fig. 2, the device includes:
a selection module 20, configured to select, according to characteristics of pixel samples of a current CU and an adjacent CU of the current CU, one coding manner for predictive or matching coding of the current CU from A predetermined predictive coding manners and matching coding manners including at least one predictive coding manner with different prediction characteristics and matching coding manners with mutually different matching characteristics, and determine the selected coding manner as an optimal coding manner, wherein the A predictive coding manners and matching coding manners include: a predictive coding manner, matching coding manner 1, matching coding manner 2, ...... and matching coding manner A-1, and A is an integer more than or equal to 2; and
a coding module 22, coupled with the selection module 20 and configured to perform predictive coding or matching coding on the current CU by adopting the optimal coding manner.

Under comprehensive effects of each of the abovementioned modules, the technical solution of judging a coding manner which is the most proper for a current unit to be coded according to characteristics of pixel samples of the current CU to be coded and an adjacent unit of the CU and further coding the current CU according to the determined optimal coding manner is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

In the embodiment, for coding manner selection of the selection module 20: a value of A is selected from a set {3,4,5}, wherein, when A is equal to 4, the 4 coding manners include: the predictive coding manner, a block matching coding manner, a string matching coding manner and a palette coding manner; and when A is equal to 3, the 3 coding manners include: the predictive coding manner, the block matching coding manner and the string matching coding manner.

The embodiment further provides a method for decoding an image, which corresponds to the method for coding an image. Fig. 3 is a flowchart of a method for decoding an image according to an embodiment of the present disclosure, and as shown in Fig. 3, the method includes the following steps:
Step S302: entropy decoding is performed on an input bitstream, data information obtained by entropy decoding is parsed, and one decoding manner is selected for predictive or matching decoding of a current CU from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A is an integer more than or equal to 2; and
Step S304: predictive decoding operation or matching decoding operation is performed on the current CU according to the selected predictive decoding manner or matching decoding manner.

By each of the abovementioned steps, the technical solution of judging a decoding manner which is the most proper for a current unit to be decoded according to characteristics of pixel samples of the current CU to be decoded and an adjacent unit of the CU and further decoding the current CU according to the determined optimal coding manner is adopted, so that the problem that there is yet no technical solution which can perform high-efficiency coding or high-efficiency decoding for a screen in the related technology is solved, and multiple decoding manners may further be combined for decoding to rapidly and efficiently implement a coding or decoding process.

According to the decoding method provided by the embodiment of the present disclosure, the A (e.g., 3≤A≤5) predictive decoding manners and matching decoding manners with different prediction and matching characteristics are predetermined, and when compressed bitstream data of the current decoding unit is decoded, one of the A predictive decoding manners and matching decoding manners is selected for predictive decoding or matching decoding of the current decoding unit according to information read from the compressed bitstream data or the information read from the compressed bitstream data and a result obtained by analytically evaluating the characteristics of the current CU and the adjacent CU.

Optionally, a value of A is selected from a set {3,4,5}, wherein, when A is equal to 4, the 4 decoding manners include: a predictive decoding manner, a block copy decoding manner, a string copy decoding manner and a palette decoding manner; and when A is equal to 3, the 3 decoding manners include: the predictive decoding manner, the block copy decoding manner and the string copy decoding manner.

In a practical process, there may be the following main conditions for determining the optimal decoding manner according to the characteristics of the pixel samples of the current CU and the adjacent CU, it is important to note that a syntax element composition mentioned hereinafter is only an example, and any technical solution conceivable based on the inventive concept of the embodiment of the present disclosure shall fall within the scope of protection of the embodiment of the present disclosure.

### First condition

The current CU and the adjacent CU consist of syntax elements, wherein the syntax elements include the following information:
a CU header, a predictive and matching manner identification code, a predictive mode or a matching mode;
motion vector 1 or matching position 1, unmatched pixel sample 1, motion vector 2 or matching position 2, unmatched pixel sample 2, ......, motion vector N or matching position N, unmatched pixel sample N; and
predictive residuals or matching residuals, wherein N is an integer more than 2.

In the embodiment, a value of the predictive and matching manner identification code includes at least one of: 0, 1, 2, ...... and A-1, wherein it is indicated that the predictive decoding manner is adopted for the current CU when the predictive and matching manner identification code is 0, it is indicated that matching decoding manner 1 is adopted for the current CU when the predictive and matching manner identification code is 1, it is indicated that matching decoding manner 2 is adopted for the current CU when the predictive and matching manner identification code is 2, ......, and it is indicated that matching decoding manner A-1 is adopted for the current CU when the predictive and matching manner identification code is A-1.

### Second condition

The current CU and the adjacent CU consist of syntax elements, wherein the syntax elements include the following information:
a CU header, a predictive and matching manner identification code, a predictive mode or a matching mode;
motion vector 1 and/or displacement vector 1; or index map 1, unmatched pixel sample 1, motion vector 2 and/or displacement vector 2; or index map 2, unmatched pixel sample 2, ......, motion vector N and/or displacement vector N; or index map N, unmatched pixel sample N; and
predictive residuals or matching residuals, wherein N is an integer more than 2.

In the embodiment, a value of the predictive and matching manner identification code includes at least one of: 0, 1, 2 and 3, wherein it is indicated that the predictive decoding manner is adopted for the current CU when the predictive and matching manner identification code is 0, it is indicated that the block copy decoding manner is adopted for the current CU when the predictive and matching manner identification code is 1, it is indicated that the string copy decoding manner is adopted for the current CU when the predictive and matching manner identification code is 2, and it is indicated that the palette decoding manner is adopted for the current CU when the predictive and matching manner identification code is 3.

### Third condition

The current CU and the adjacent CU consist of syntax elements, wherein the syntax elements include the following information:
a CU header, a predictive and matching manner identification code, a predictive mode or a matching mode;
motion vector 1 or displacement vector 1; or position vector 1 and matching length 1, unmatched pixel sample 1, motion vector 2 or displacement vector 2; or position vector 2 and matching length 2, unmatched pixel sample 2, ......, motion vector N and/or displacement vector N; or position vector N and matching length N, unmatched pixel sample N; and
predictive residuals or matching residuals, wherein N is an integer more than 2.

In the embodiment, a value of the predictive and matching manner identification code includes at least one of: 0, 1 and 2, wherein it is indicated that the predictive decoding manner is adopted for the current CU when the predictive and matching manner identification code is 0, it is indicated that the block copy decoding manner is adopted for the current CU when the predictive and matching manner identification code is 1, and it is indicated that the string copy decoding manner is adopted for the current CU when the predictive and matching manner identification code is 2.

### Fourth condition

The current CU and the adjacent CU consist of syntax elements, wherein the syntax elements include the following information:
a CU header, a predictive and matching manner flag bit, a predictive and matching manner identification code or a predictive and matching manner partial identification code; or blank, a predictive mode or a matching mode;
motion vector 1 or matching position 1, unmatched pixel sample 1, motion vector 2 or matching position 2, unmatched pixel sample 2, ......, motion vector N or matching position N, unmatched pixel sample N; and
predictive residuals or matching residuals, wherein N is an integer more than 2.

In the embodiment of the present disclosure, the method further includes that: when the predictive and matching manner flag bit is 0, it is indicated that syntax elements forming CUs of the bitstream include one of: a predictive and matching manner partial identification code which is not blank; and a predictive and matching manner partial identification code which is blank; and when the predictive and matching manner flag bit is 1, it is indicated that syntax elements forming CUs of the bitstream include the predictive and matching manner identification code.

In the embodiment, when the syntax elements forming the CUs of the bitstream include a predictive and matching manner partial identification code and the predictive and matching manner partial identification code is not blank, the decoding manner adopted for the current CU is determined according to the predictive and matching manner partial identification code and an evaluation result of the characteristics of the pixel samples of the current CU and the adjacent CU; and when the syntax elements forming the CUs of the bitstream include a predictive and matching manner partial identification code and the predictive and matching manner partial identification code is blank, the decoding manner adopted for the current CU is determined according to the evaluation result of the characteristics of the pixel samples of the current CU and the adjacent CU.

### Fifth condition

The current CU and the adjacent CU consist of syntax elements, wherein the syntax elements include the following information:
a CU header, a predictive and matching manner flag bit or blank, a predictive and matching manner identification code or a predictive and matching manner partial identification code; or blank, a predictive or matching mode flag bit, a predictive or matching mode identification code or a predictive or matching mode partial identification code or blank;
motion vector 1 or matching position 1, unmatched pixel sample 1, motion vector 2 or matching position 2, unmatched pixel sample 2, ......, motion vector N or matching position N, unmatched pixel sample N; and
predictive residuals or matching residuals, wherein N is an integer more than 2.

In the embodiment, when the predictive and matching manner flag bit is blank, the predictive and matching manner flag bit is set to be a preset fixed value; when a value of the predictive or matching mode flag bit is 1, it is indicated that syntax elements forming CUs of the bitstream include the predictive and matching mode identification code, and the decoding manner for the current CU is determined according to a value corresponding to the predictive and matching mode identification code; and when the value of the predictive or matching mode flag bit is 0, it is indicated that syntax elements forming CUs of the bitstream include a predictive or matching mode partial identification code which is not blank, or a predictive or matching mode partial identification code which is blank.

Furthermore, when the syntax elements forming the CUs of the bitstream include a predictive and matching mode partial identification code and the predictive and matching mode partial identification code is not blank, the decoding manner adopted for the current CU is determined according to the predictive and matching mode partial identification code and an evaluation result of the characteristics of the pixel samples of the current CU and the adjacent CU; and when syntax elements forming CUs of the bitstream include a predictive and matching mode partial identification code and the predictive and matching mode partial identification code is blank, the decoding manner adopted for the current CU is determined according to the evaluation result of the characteristics of the pixel samples of the current CU and the adjacent CU.

### Sixth condition

The current CU and the adjacent CU consist of syntax elements, wherein the syntax elements include the following information:
a CU header, a predictive and matching manner flag bit or blank, a predictive and matching manner identification code or a predictive and matching manner partial identification code; or blank, the predictive or matching mode flag bit or blank, the predictive or matching mode identification code or the predictive or matching mode partial identification code or blank;
motion vector 1 and/or displacement vector 1; or index map 1, unmatched pixel sample 1, motion vector 2 and/or displacement vector 2; or index map 2, unmatched pixel sample 2, ......, motion vector N and/or displacement vector N; or index map N, unmatched pixel sample N; and
predictive residuals or matching residuals, wherein N is an integer more than 2.

In the embodiment, when the predictive and matching manner flag bit is not blank, a value of the predictive and matching manner flag bit is set to be 0 or 1; when the predictive and matching manner flag bit is blank, the value of the predictive and matching manner flag bit is set to be a preset fixed value; when the predictive and matching mode flag bit is not blank, a value of the predictive and matching mode flag bit is set to be 0 or 1; and when the predictive and matching mode flag bit is blank, the value of the predictive and matching mode flag bit is set to be a preset fixed value.

It is important to note that a position of the CU header in the syntax elements is fixedly the beginning of the CU in the syntax elements, and positions of the other syntax elements in the bitstream are determined according to a predetermined arrangement sequence, wherein the other syntax elements are syntax elements except the CU header in the syntax elements. Moreover, for any syntax element among the syntax elements, the syntax element is split into multiple parts, and the multiple parts are placed at the same position or different positions of a bitstream.

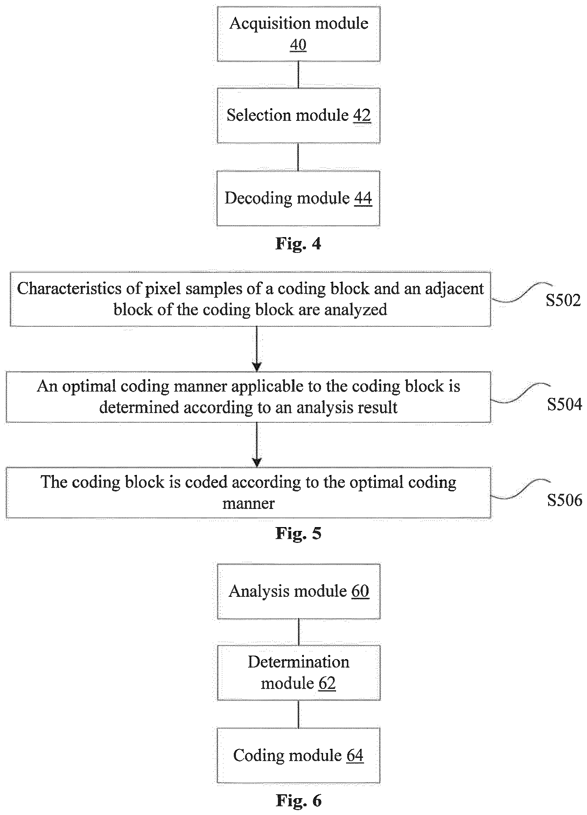

The embodiment further provides a device for decoding an image, which is configured to implement the abovementioned embodiment and exemplary implementation mode, what has been described will not be elaborated, and modules involved in the device will be described below. For example, term "module", used below, is a combination of software and/or hardware capable of realizing a preset function. The device described in the following embodiment is preferably implemented by software, but implementation of the device with hardware or the combination of software and hardware is also possible and conceivable. Fig. 4 is a structure block diagram of a device for decoding an image according to an embodiment of the present disclosure. As shown in Fig. 4, the device includes:
an acquisition module 40, configured to perform entropy decoding on an input bitstream, and parse data information obtained by entropy decoding;
a selection module 42, coupled with the acquisition module 40 and configured to select one decoding manner for predictive or matching decoding of a current CU from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A is an integer more than or equal to 2; and
a decoding module 44, coupled with the selection module 42 and configured to perform predictive decoding operation or matching decoding operation on the current CU according to the selected predictive decoding manner or matching decoding manner.

Under comprehensive effects of each of the abovementioned modules, the technical solution of judging a decoding manner which is the most proper for a current unit to be decoded according to characteristics of pixel samples of the current CU to be decoded and an adjacent unit of the CU and further decoding the current CU according to the determined optimal coding manner is adopted, so that the problem that there is yet no technical solution which can perform high-efficiency coding or high-efficiency decoding for a screen in the related technology is solved, and multiple decoding manners may further be combined for decoding to rapidly and efficiently implement a coding or decoding process.

In the embodiment, for decoding manner selection of the selection module 42: a value of A is selected from a set {3,4,5}, wherein, when A is equal to 4, the 4 decoding manners include: a predictive decoding manner, a block copy decoding manner, a string copy decoding manner and a palette decoding manner; and when A is equal to 3, the 3 decoding manners include: the predictive decoding manner, the block copy decoding manner and the string copy decoding manner.

The embodiment of the present disclosure further provides a method for coding an image, Fig. 5 is another flowchart of a method for coding an image according to an embodiment of the present disclosure, and as shown in Fig. 5, the method includes the following steps:
Step S502: characteristics of pixel samples of a coding block and an adjacent block of the coding block are analyzed;
Step S504: an optimal coding manner applicable to the coding block is determined according to an analysis result; and
Step S506: the coding block is coded according to the optimal coding manner.

By each of the abovementioned steps, the technical solution of judging a coding manner which is the most proper for a current unit to be coded according to characteristics of pixel samples of the current CU to be coded and an adjacent unit of the CU and further coding the current CU according to the determined optimal coding manner is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

Optionally, multiple implementation manners may be adopted for Step S502, and in an optional example of the embodiment of the present disclosure, Step S502 may be implemented by the following technical solution: the characteristics of the coding block are analyzed to obtain palette parameters of the coding block; and characteristics of partially or completely reconstructed pixel samples in the adjacent block are analyzed according to the palette parameters to obtain the analysis result. Moreover, the analysis result may be implemented in a manner as follows: the reconstructed pixel samples are converted according to the palette parameters, values of palette indices is obtained, and the values of palette indices is determined as the analysis result; and the partially or completely reconstructed pixel samples in the adjacent block are acquired, and copy values of the reconstructed pixel samples are determined as the analysis result.

In an optional implementation manner for Step S504, the optimal coding manner applicable to the coding block is determined from multiple coding manners, wherein the multiple coding manners include at least one of: a predictive coding manner, a block matching coding manner, a string matching coding manner and a palette coding manner.

In the embodiment, when the optimal coding manner is the palette coding manner, the technical solution of Step S506 may be implemented in a manner as follows: the coding block is coded according to the palette parameters and the analysis result. It is important to note that palette decoding parameters including the palette parameters are also required to be written into a bitstream corresponding to the coding block after the coding block is coded according to the palette parameters and the analysis result.

The embodiment further provides a device for coding an image, which is configured to implement the abovementioned embodiment and exemplary implementation mode, what has been described will not be elaborated, and modules involved in the device will be described below. For example, term "module", used below, is a combination of software and/or hardware capable of realizing a preset function. The device described in the following embodiment is preferably implemented by software, but implementation of the device with hardware or the combination of software and hardware is also possible and conceivable. Fig. 6 is another structure block diagram of a device for coding an image according to an embodiment of the present disclosure. As shown in Fig. 6, the device includes:
an analysis module 60, configured to perform characteristic analysis on pixel samples of a coding block and an adjacent block of the coding block;
a determination module 62, coupled with the analysis module 60 and configured to determine an optimal coding manner applicable to the coding block according to an analysis result; and
a coding module 64, coupled with the determination module 62 and configured to code the coding block according to the optimal coding manner.

Under comprehensive effects of each of the abovementioned modules, the technical solution of judging a coding manner which is the most proper for a current unit to be coded according to characteristics of pixel samples of the current CU to be coded and an adjacent unit of the CU and further coding the current CU according to the determined optimal coding manner is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

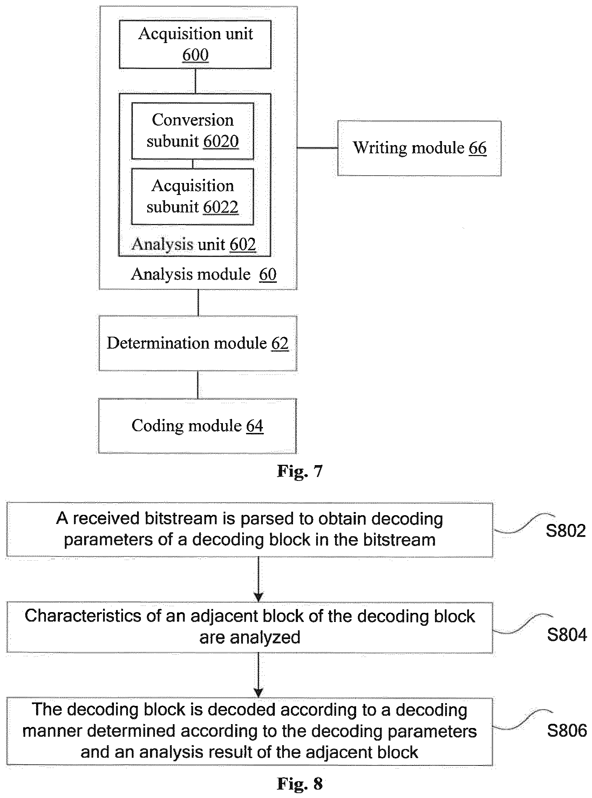

Optionally, as shown in Fig. 7, the analysis module 60 may include the following units: an acquisition unit 600, configured to perform characteristic analysis on the coding block to obtain palette parameters of the coding block; and an analysis unit 602, coupled with the acquisition unit 600 and configured to analyze characteristics of partially or completely reconstructed pixel samples in the adjacent block according to the palette parameters to obtain the analysis result, wherein the acquisition unit 600 is further configured to acquire the partially or completely reconstructed pixel samples in the adjacent block, and determine copy values of the reconstructed pixel samples as the analysis result.

In order to realize a function of the analysis unit 602, the analysis unit includes: a conversion subunit 6020, configured to convert the reconstructed pixel samples according to the palette parameters; and an acquisition subunit 6022, configured to obtain values of palette indices and determine the values of palette indices as the analysis result.

In the embodiment, the determination module 62 is further configured to determine the optimal coding manner applicable to the coding block from multiple coding manners, wherein the multiple coding manners include at least one of: a predictive coding manner, a block matching coding manner, a string matching coding manner and a palette coding manner. When the optimal coding manner is the palette coding manner, the coding module 64 is further configured to code the coding block according to the palette parameters and the analysis result.

In the embodiment of the present disclosure, the device further includes: a writing module 66, configured to write palette decoding parameters including the palette parameters into a bitstream corresponding to the coding block.

The embodiment of the present disclosure further provides a method for decoding an image. Fig. 8 is another flowchart of a method for decoding an image according to an embodiment of the present disclosure, and as shown in Fig. 8, the method includes:
Step S802: a received bitstream is parsed to obtain decoding parameters of a decoding block in the bitstream;
Step S804: characteristics of an adjacent block of the decoding block are analyzed; and
Step S806: the decoding block is decoded according to a decoding manner determined according to the decoding parameters and an analysis result of the adjacent block.

By each of the abovementioned steps, the technical solution of judging a decoding manner which is the most proper for a current unit to be decoded according to characteristics of pixel samples of the current CU to be decoded and an adjacent unit of the CU and further decoding the current CU according to the determined optimal coding manner is adopted, so that the problem that there is yet no technical solution which can perform high-efficiency coding or high-efficiency decoding for a screen in the related technology is solved, and multiple decoding manners may further be combined for decoding to rapidly and efficiently implement a coding or decoding process.

When the decoding parameters include parameters for palette decoding manner, Step S804 may be implemented by the following technical solution: characteristics of partially or completely reconstructed pixel samples in the adjacent block are analyzed to obtain the analysis result, values of palette indices obtained by converting the reconstructed pixel samples according to the parameters for palette decoding manner or copy values of the reconstructed pixel samples are determined as the analysis result, and the decoding block is further decoded according to the analysis result by the decoding manner indicated by the parameters for palette decoding manner.

It is important to note that the decoding manner includes at least one of: a predictive decoding manner, a block copy decoding manner, a string copy decoding manner and a palette decoding manner.

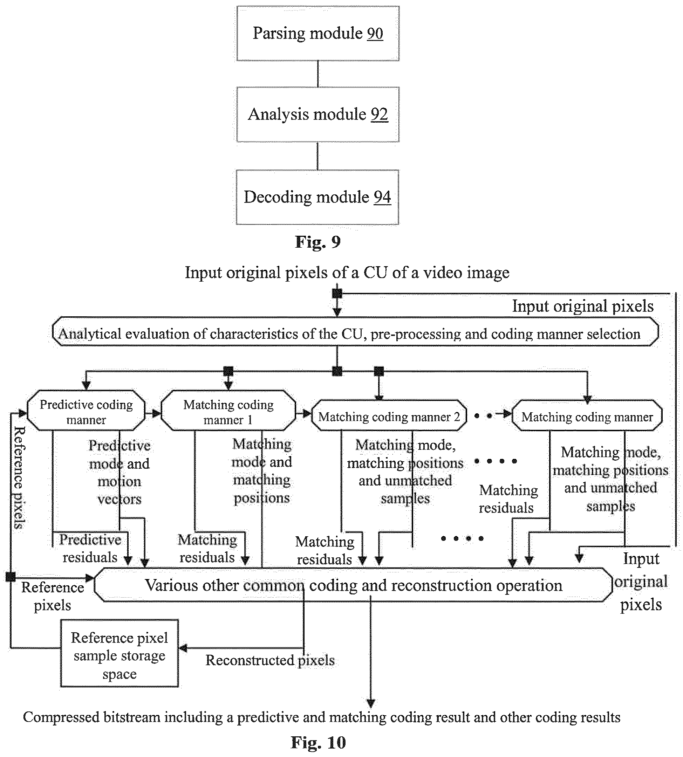

The embodiment further provides a device for decoding an image, which is configured to implement the abovementioned embodiment and exemplary implementation mode, what has been described will not be elaborated, and modules involved in the device will be described below. For example, term "module", used below, is a combination of software and/or hardware capable of realizing a preset function. The device described in the following embodiment is preferably implemented by software, but implementation of the device with hardware or the combination of software and hardware is also possible and conceivable. Fig. 9 is another structure block diagram of a device for coding an image according to an embodiment of the present disclosure. As shown in Fig. 9, the device includes:
a parsing module 90, configured to parse a received bitstream to obtain decoding parameters of a decoding block in the bitstream;
an analysis module 92, coupled with the parsing module 90 and configured to analyze characteristics of an adjacent block of the decoding block; and
a decoding module 94, coupled with the analysis module 92 and configured to decode the decoding block according to a decoding manner determined according to the decoding parameters and an analysis result.

Under comprehensive effects of each of the abovementioned modules, the technical solution of judging a decoding manner which is the most proper for a current unit to be decoded according to characteristics of pixel samples of the current CU to be decoded and an adjacent unit of the CU and further decoding the current CU according to the determined optimal coding manner is adopted, so that the problem that there is yet no technical solution which can perform high-efficiency coding or high-efficiency decoding for a screen in the related technology is solved, and multiple decoding manners may further be combined for decoding to rapidly and efficiently implement a coding or decoding process.

When the decoding parameters include parameters for palette decoding manner, the analysis module 92 is further configured to analyze characteristics of partially or completely reconstructed pixel samples in the adjacent block to obtain the analysis result, wherein values of palette indices obtained by converting the reconstructed pixel samples according to the parameters for palette decoding manner or copy values of the reconstructed pixel samples are determined as the analysis result.

In the embodiment, the decoding module 94 is further configured to decode the decoding block according to the analysis result by the decoding manner indicated by the parameters for palette decoding manner.

The image coding process may be described by the following solution in more detail, and as shown in Fig. 10, the technical solution shown in Fig. 10 may be described mainly from the following aspects.
1) CU characteristic analytical evaluation, preprocessing and coding manner selection step: analytical evaluation is performed on characteristics of pixel samples of a current CU and an adjacent CU, including necessary preprocessing over the pixel samples, a coding manner which is the most proper for predictive or matching coding of the current CU in A (e.g., 3≤A≤5) predetermined predictive coding manners and matching coding manners with different prediction and matching characteristics is judged, and the coding manner, called an optimal coding manner, is selected for predictive or matching coding of the current CU in Step 2) according to a judgment result, wherein the A predictive coding manners and matching coding manners are called a predictive coding manner, matching coding manner 1, matching coding manner 2, ...... and matching coding manner A-1 respectively. Methods for analytical evaluation, for example, include: a method of taking a coding result of the adjacent CU as a basis or reference, a method of calculating the number of pixels in different colors in the current CU and a method of performing pre-coding by a plurality of coding manners or all of the A coding manners and then evaluating pre-coding results, for example, calculating rate-distortion cost of each coding manner. The preprocessing, for example, includes: sample quantization, color quantization and color-based pixel clustering.
2) A predictive and matching coding step: predictive or matching coding is performed on the current CU by adopting the optimal coding manner selected in Step 1), wherein the optimal coding manner is one of the predictive coding manner, matching coding manner 1, matching coding manner 2, ...... and matching coding manner A-1. Output of predictive coding includes predictive mode, inter-prediction motion vectors and predictive residuals, i.e. differences between input original pixel samples of the current CU and predictive pixel samples (called predictive current samples). Output of matching coding includes a matching mode, matching positions, unmatched samples and matching residuals, wherein the matching positions are used for indicating variables of positions of matching reference samples matched with matched current samples in the current CU in a reference pixel sample storage space; the unmatched samples are input original pixel samples of which matches are not found in the reference pixel sample storage space according to a predetermined matching criterion, and if a predetermined matching criterion for a certain matching coding manner is lax and any great matching error is allowed, matches may always be found and output of the matching coding manner does not include any unmatched sample. The matching residuals are differences between the input original pixel samples and the matching reference samples, if a predetermined matching criterion for a certain matching coding manner is absolutely accurate nondestructive matching, the matching residuals are zero, that is, output of the matching coding manner does not include any matching residual; if a predetermined matching criterion for a matching coding manner is approximate destructive matching, the matching residuals may not be zero. Another destructive matching condition is that preprocessing of sample quantization, color quantization or color-based pixel clustering is performed on the input original pixel samples and then matching coding is performed, and under such a condition, the matching residuals (i.e. the differences between the input original pixel samples and the matching reference samples) may also not be zero even though matching coding is nondestructive, because sample quantization, color quantization or color-based pixel clustering is destructive.
3) A step of various other common coding and reconstruction operation: all of other coding and reconstruction operation over the current CU is implemented, various common technologies, such as transform, quantization, reverse transform, reverse quantization, compensation corresponding to the predictive residuals and the matching residuals (reverse operation of residual calculation operation), residual prediction and calculation, Differential Pulse Code Modulation (DPCM), first-order and higher-order differentiation, mapping, run-length calculation, indexing, de-blocking filtering, sample adaptive offset, coding and reconstruction operation and entropy coding operation, are executed on various input parameters and variables. Input of the step includes the output of Step 2) and input original pixels. Output of the step includes reconstructed pixels (including completely reconstructed pixels and pixels partially reconstructed to different extents) and a bitstream including a predictive and matching coding result and other coding results. The reconstructed pixels are placed in the reference pixel sample storage space, and are configured as reference pixels for subsequent steps of predictive and matching coding operation and various other common coding and reconstruction operation. The bitstream is final output of the coding method, and includes all syntax elements for decoding and reconstruction of a corresponding decoding method, particularly syntax elements such as the predictive mode, the motion vectors, the matching mode, the matching positions and the unmatched samples.

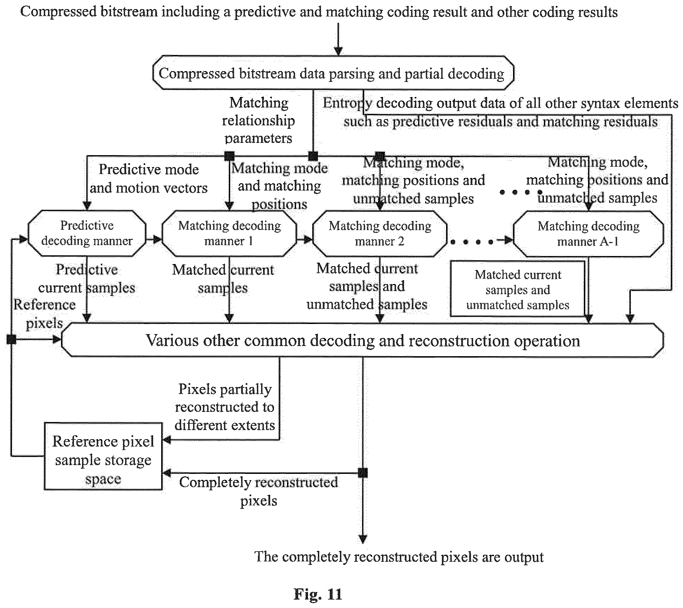

The image decoding process may be described by the following solution in more detail, and as shown in Fig. 11, the technical solution shown in Fig. 11 may be described mainly from the following aspects.
1) A compressed bitstream data parsing and partial decoding step: entropy decoding is performed on an input compressed bitstream including compressed data of a predictive mode, motion vectors, a matching mode, matching positions and unmatched samples and compressed data of all other syntax elements, and meanings of various kinds of data obtained by entropy decoding are parsed. Matching relationship parameters, such as the predictive mode, the motion vectors, the matching mode, the matching positions and the unmatched samples, obtained by parsing and partial decoding (such as transform decoding, prediction and compensation, i.e. reverse operation of residual calculation operation, DPCM decoding, first-order and higher-order differential decoding, mapping decoding, run-length decoding and index decoding) are output to each subsequent predictive decoding or matching decoding step. Parsed entropy decoding output data (i.e. an entropy decoding result) of all other syntax elements such as predictive residuals and matching residuals is output to each other subsequent common decoding and reconstruction operation step. Particularly, a corresponding predictive decoding manner or matching decoding manner is selected to perform predictive or matching decoding on a current CU in the following Step 2) according to information obtained by parsing the compressed bitstream data or the information obtained by parsing the compressed bitstream data and a result obtained by analytically evaluating characteristics of the current CU and an adjacent CU. Analytical evaluation methods, for example, include: a method of taking a plurality of decoding results of the adjacent CU as a basis or reference and a method of performing partial pre-decoding by a plurality of decoding manners or all of A decoding manners and then evaluating partial pre-decoding results.
2) A predictive and matching decoding operation step with A (e.g., 3≤A≤5) predictive decoding manners and matching decoding manners with different prediction and matching characteristics: predictive decoding operation or matching decoding operation is performed on the current CU by adopting the predictive decoding manner or matching decoding manner selected in Step 1). Input of predictive decoding operation includes a predictive mode and inter-prediction motion vectors. Input of matching decoding operation includes a matching mode and matching positions, and may also include unmatched samples. The matching positions are used for indicating positions from which matching reference samples are copied in a reference pixel sample storage space and pasted to positions of matched current samples of the current CU. Obviously, the matched current samples are copies of the matching reference samples, and are equal to the matching reference samples in numerical value. The unmatched samples are pixel samples obtained by directly parsing and decoding the compressed bitstream data and are pasted to positions of pixel samples currently in decoding in the current CU, and the unmatched samples usually do not exist in the reference pixel sample storage space. Output of A decoding operation includes predictive current samples or the matched current samples (equal to the matching reference samples in numerical value) plus the unmatched samples (existing in some matching decoding manners). The matched current samples and the unmatched samples which may exist are combined to form complete matching decoding output of the current CU.
3) A step of various other common decoding and reconstruction operation: all of other decoding and reconstruction operation over the current CU is implemented, and decoding and reconstruction operation is executed on various input parameters and variables based on various common technologies, such as reverse transform, reverse quantization, compensation corresponding to the predictive residuals and the matching residuals (reverse operation of residual calculation operation), residual prediction and calculation (i.e. reverse operation of residual calculation operation), DPCM, first-order and higher-order differentiation, mapping, run-length calculation, indexing, de-blocking filtering and sample adaptive offset, wherein input of the step includes the entropy decoding output data, output by Step 1), of all the other syntax elements such as the predictive residuals and the matching residuals and output of Step 2), i.e. the predictive current samples or the matched current samples plus the unmatched samples which may exist. Output of the step includes reconstructed pixels (including completely reconstructed pixels and pixels partially reconstructed to different extents). The reconstructed pixels are placed in the reference pixel sample storage space, and are configured as reference pixels for subsequent steps of predictive and matching decoding operation and various other common decoding and reconstruction operation. The completely reconstructed pixels are also final output of the decoding method.

In order to better understand the image coding or image decoding process, descriptions will be given below with reference to exemplary embodiments and not intended to limit the scope of protection of the embodiment of the present disclosure.

### Exemplary embodiment 1: 4 coding manners

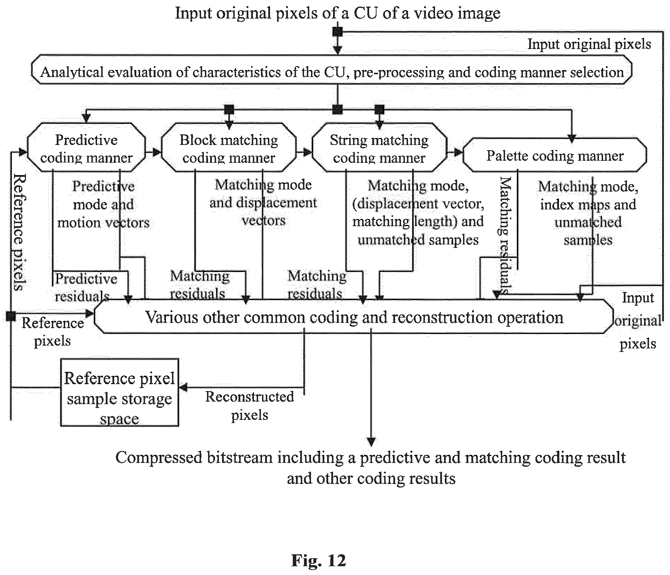

Positive integer A is equal to 4, and the 4 coding manners are the predictive coding manner, a block matching coding manner, a string matching coding manner and a palette coding manner, as shown in Fig. 12.

The block matching coding manner implements matching coding by taking a plurality of blocks (called matched current blocks, their positions in a frame of image may be indicated by two-dimensional coordinates) with certain sizes (such as 64x64 samples, 32x32 samples, 16x16 samples, 8x8 samples, 8x4 samples, 4x8 samples and 4x4 samples) as units. The matching reference samples form a matching block, called a matching reference block, in the reference pixel sample storage space, and the position of the matching reference block in the frame of image may also be indicated by a two-dimensional coordinate, so that the matching positions may be indicated by differences, called displacement vectors, between the two-dimensional coordinate of the matching reference block and the two-dimensional coordinates of the matched current blocks in the block matching coding manner.

The string matching coding manner implements matching coding by taking length-variable pixel sample strings (called matched current strings, their positions may be indicated by two-dimensional coordinates or linear addresses) as units. The matching pixel samples form a matching string, called a matching reference string, in the reference pixel sample storage space, and the position of the matching reference string may also be indicated by a two-dimensional coordinate or a linear address, so that the matching positions may be indicated by differences between the two-dimensional coordinate of the matching reference string and the two-dimensional coordinates of the matched current strings or differences between the linear address of the matching reference string and the linear addresses of the matched current strings, usually called displacement vectors, in the string matching coding manner. Since a length (equal to lengths of the matched current strings) of the matching reference string is variable, a variable called a matching length is also required to completely represent the matching positions together with displacement vector, i.e. (displacement vector, matching length). A string matching coding result of the current CU includes I (I≥1) matched strings and J (J≥0) unmatched pixel samples, and I pairs of (displacement vector, matching length) and J unmatched pixel samples are output.

The palette coding manner only adopts a part of pixels of the reference pixel sample storage space as reference pixels, so that a group of K pixels (4≤K≤64 usually) is selected from the reference pixel sample storage space according to a predetermined method, and is timely updated, the K pixels forming a palette and each pixel in the palette being indicated by an index. The palette coding manner adopts the pixels of the palette as the reference pixels, the matching positions of the matching reference samples are the indexes of the matching reference samples in the palette, and the indexes of all the matching reference samples of the current CU form an index array, called index maps.

One of functions of the step of various other common coding and reconstruction operation is to execute various common transform, prediction and residual calculation, DPCM, first-order and higher-order differentiation, mapping, run-length calculation and index coding, which may be required, on the parameters and variables such as the matching mode, the displacement vectors, the matching lengths, the index maps and the unmatched samples.

The palette coding manner and the palette are optional and may be omitted, so that, when positive integer A is equal to 3 in the coding method, there may be 3 coding manners which are respectively the predictive coding manner, the block matching coding manner and the string matching coding manner. The string matching coding manner is optional and may be omitted, so that when positive integer A is equal to 3 in the coding method, there may be 3 coding manners which are respectively the predictive coding manner, the block matching coding manner and the palette coding manner.

### Exemplary embodiment 2: 4 decoding manners

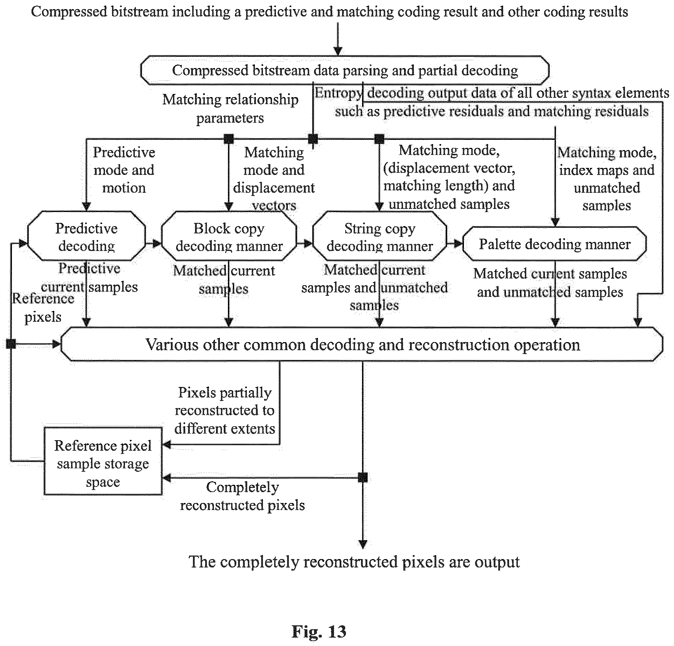

Positive integer A is equal to 4, and the 4 decoding manners are the predictive decoding manner, a block copy decoding manner, a string copy decoding manner and a palette decoding manner, as shown in Fig. 13.

The block copy decoding manner implements matching decoding by taking a plurality of blocks (called matched current blocks, their positions in a frame of image may be indicated by two-dimensional coordinates) with certain sizes (such as 64x64 samples, 32x32 samples, 16x16 samples, 8x8 samples, 8x4 samples, 4x8 samples and 4x4 samples) as units, the matching reference samples form a matching block, called a matching reference block, in the reference pixel sample storage space, and the position of the matching reference block in the frame of image may also be indicated by a two-dimensional coordinate, so that the matching positions may be indicated by differences, called displacement vectors, between the two-dimensional coordinate of the matching reference block and the two-dimensional coordinates of the matched current blocks in the block copy decoding manner.

The string copy decoding manner implements matching decoding by taking length-variable pixel sample strings (called matched current strings, their positions may be indicated by two-dimensional coordinates or linear addresses) as units, the matching pixel samples form a matching string, called a matching reference string, in the reference pixel sample storage space, and the position of the matching reference string may also be indicated by a two-dimensional coordinate or a linear address, so that the matching positions may be indicated by differences between the two-dimensional coordinate of the matching reference string and the two-dimensional coordinates of the matched current strings or differences between the linear address of the matching reference string and the linear addresses of the matched current strings, usually called displacement vectors, in the string copy decoding manner; since a length (equal to lengths of the matched current strings) of the matching reference string is variable, a variable called a matching length is also required to completely represent the matching positions together with displacement vector, i.e. (displacement vector, matching length); input for string copy decoding of the current CU includes the matching mode parsed and decoded from the bitstream data, I (I≥1) pairs of (displacement vector, matching length) and J (J ≥ 0) unmatched pixel samples.

The palette decoding manner only adopts a part of pixels of the reference pixel sample storage space as reference pixels, so that a group of K pixels (4≤K≤64 usually) is selected from the reference pixel sample storage space according to a predetermined method, and is timely updated, the K pixels forming a palette and each pixel in the palette being indicated by an index. The palette decoding manner adopts the pixels of the palette as the reference pixels, the matching positions of the matching reference samples are the indexes of the matching reference samples in the palette, and the indexes of all the matching reference samples of the current CU form an index array, called index maps. The index maps are parsed and decoded from the bitstream data, and are one of input of palette decoding.

One of functions of the bitstream data parsing and partial decoding step is to execute various common transform decoding, prediction and compensation (reverse operation of residual calculation operation), DPCM decoding, first-order and higher-order differential decoding, mapping decoding, run-length decoding and index decoding operation, which may be required, on partial decoding data of syntax elements, obtained by entropy decoding, representative of the matching relationship parameters such as the matching mode, the displacement vectors, the matching lengths, the index maps and the unmatched samples in the bitstream to obtain original matching relationship parameters such as the matching mode, the displacement vectors, the matching lengths, the index maps and the unmatched samples as input of operation steps of the block copy decoding manner, the string copy decoding manner and the palette decoding manner.

The palette decoding manner and the palette are optional and may be omitted, so that when positive integer A is equal to 3 in the decoding method, there are 3 decoding manners which are respectively the predictive decoding manner, the block copy decoding manner and the string copy decoding manner. The string copy decoding manner is optional and may be omitted, so that when positive integer A is equal to 3 in the decoding method, there are 3 decoding manners which are respectively the predictive decoding manner, the block copy decoding manner and the palette decoding manner.

### Exemplary embodiment 3: bitstream including a predictive and matching manner identification code and other coding results

A CU, i.e. a CU part, in the bitstream consists of syntax elements loaded with the following information:
a CU header, a predictive and matching manner identification code, a predictive mode or a matching mode, motion vector 1 or matching position 1, unmatched pixel sample 1, motion vector 2 or matching position 2, unmatched pixel sample 2, ......, more motion vectors or matching positions, more unmatched pixel samples, predictive residuals or matching residuals and the other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header and the syntax element predictive and matching manner identification code may also not exist in bitstream data of a certain CU.

The predictive and matching manner identification code may take the following code values and have the following semantic meanings:

| Code value | Semantic meaning |
|---|---|
| 0 | A predictive coding or decoding manner is adopted for the current CU |
| 1 | Matching coding or decoding manner 1 is adopted for the current CU |
| 2 | Matching coding or decoding manner 2 is adopted for the current CU |
| ... | ... |
| A-1 | Matching coding or decoding manner A-1 is adopted for the current CU |

During predictive or matching coding or predictive or matching decoding of the current CU, a predictive or matching method adopted for the current CU is determined for coding or decoding according to the code value of the predictive and matching manner identification code of the current CU and the following logical relationships:
if (the code value of the predictive and matching manner identification code==0), the predictive manner is adopted for coding or decoding the current CU;
if (the code value of the predictive and matching manner identification code==1), matching manner 1 is adopted for coding or decoding the current CU;
if (the code value of the predictive and matching manner identification code==2), matching manner 2 is adopted for coding or decoding the current CU;
if (the code value of the predictive and matching manner identification code==i), matching manner i is adopted for coding or decoding the current CU;
if (the code value of the predictive and matching manner identification code==A-1), matching manner A-1 is adopted for coding or decoding the current CU; and
symbol "==" means "equal to".

### Exemplary embodiment 4: bitstream including a predictive and matching manner identification code and other coding results and 4 coding or decoding manners

A CU, i.e. a CU part, in the bitstream consists of syntax elements loaded with the following information:
a CU header, the predictive and matching manner identification code, a predictive mode or a matching mode, motion vector 1 or displacement vector 1 or (displacement vector 1, matching length 1) or index map 1, unmatched pixel sample 1, motion vector 2 or displacement vector 2 or (displacement vector 2, matching length 2) or index map 2, unmatched pixel sample 2, ......, more motion vectors or displacement vectors or (displacement vector, matching length) or index maps, more unmatched pixel samples, predictive residuals or matching residuals and the other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header and the syntax element predictive and matching manner identification code may also not exist in bitstream data of a certain CU.

The predictive and matching manner identification code may take the following code values and have the following semantic meanings:

| Code value | Semantic meaning |
|---|---|
| 0 | A predictive coding or decoding manner is adopted for the current CU |
| 1 | A block matching coding or decoding manner is adopted for the current CU |
| 2 | A string matching coding or decoding manner is adopted for the current CU |
| 3 | A palette coding or decoding manner is adopted for the current CU |

During predictive or matching coding or predictive or matching decoding of the current CU, a predictive or matching method adopted for the current CU is determined for coding or decoding according to the code value of the predictive and matching manner identification code of the current CU and the following logical relationships:
if (the code value of the predictive and matching manner identification code==0), the predictive manner is adopted for coding or decoding the current CU;
if (the code value of the predictive and matching manner identification code==1), the block matching manner is adopted for coding or decoding the current CU;
if (the code value of the predictive and matching manner identification code==2), the string matching manner is adopted for coding or decoding the current CU; and
if (the code value of the predictive and matching manner identification code==3), the palette manner is adopted for coding or decoding the current CU.

### Exemplary embodiment 5: bitstream including a predictive and matching manner identification code and other coding results and 3 coding or decoding manners

A CU, i.e. a CU part, in the bitstream consists of syntax elements loaded with the following information:
a CU header, the predictive and matching manner identification code, a predictive mode or a matching mode, motion vector 1 or displacement vector 1 or (displacement vector 1, matching length 1), unmatched pixel sample 1, motion vector 2 or displacement vector 2 or (displacement vector 2, matching length 2), unmatched pixel sample 2, ......, more motion vectors or displacement vectors or (displacement vector, matching length), more unmatched pixel samples, predictive residuals or matching residuals and the other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header and the syntax element predictive and matching manner identification code may also not exist in bitstream data of a certain CU.

The predictive and matching manner identification code may take the following code values and have the following semantic meanings:

| Code value | Semantic meaning |
|---|---|
| 0 | A predictive coding or decoding manner is adopted for the current CU |
| 1 | A block matching coding or decoding manner is adopted for the current CU |
| 2 | A string matching coding or decoding manner is adopted for the current CU |

During predictive or matching coding or predictive or matching decoding of the current CU, a predictive or matching method adopted for the current CU is determined for coding or decoding according to the code value of the predictive and matching manner identification code of the current CU and the following logical relationships:
if (the code value of the predictive and matching manner identification code==0), the predictive manner is adopted for coding or decoding the current CU;
if (the code value of the predictive and matching manner identification code==1), a block matching manner is adopted for coding or decoding the current CU; and
if (the code value of the predictive and matching manner identification code==2), a string matching manner is adopted for coding or decoding the current CU.

### Exemplary embodiment 6: bitstream including a predictive and matching manner flag bit and a predictive and matching manner identification code and partial identification code

A CU, i.e. a CU part, in the bitstream consists of syntax elements loaded with the following information:
a CU header, the predictive and matching manner flag bit, the predictive and matching manner identification code or the predictive and matching manner partial identification code or blank, a predictive mode or a matching mode, motion vector 1 or matching position 1, unmatched pixel sample 1, motion vector 2 or matching position 2, unmatched pixel sample 2, ......, more motion vectors or matching positions, more unmatched pixel samples, predictive residuals or matching residuals and other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header and the syntax element predictive and matching manner flag bit may also not exist in bitstream data of a certain CU.

A value of the predictive and matching manner flag bit may be 1 or 0.

If the value of the predictive and matching manner flag bit is 1, the syntax element predictive and matching manner identification code also exists in the bitstream (but the syntax element predictive and matching manner partial identification code does not exist), and the predictive and matching manner identification code may take the following code values and have the following semantic meanings:

| Code value | Semantic meaning |
|---|---|
| 0 | A predictive decoding manner is adopted for the current CU |
| 1 | Matching decoding manner 1 is adopted for the current CU |
| 2 | Matching decoding manner 2 is adopted for the current CU |
| ... | ...... |
| A-1 | Matching decoding manner A-1 is adopted for the current CU |

If the value of the predictive and matching manner flag bit is 0, the syntax element predictive and matching manner partial identification code also exists in the compressed bitstream (but the syntax element predictive and matching manner identification code does not exist), the predictive and matching manner partial identification code may take B (B<A) code values, the code value of the predictive and matching manner partial identification code cannot independently determine the decoding manner adopted for the current CU, and is required to be combined with an analytical evaluation result of characteristics of the current CU and an adjacent CU to determine the decoding manner adopted for the current CU. The characteristics of the current CU and the adjacent CU, for example, include: a decoding manner, predictive or matching mode, motion vectors and matching positions of the adjacent CU, characteristics of a result of obtained by performing partial pre-decoding on the current CU by a plurality of decoding manners or all of A decoding manners and characteristics of decoded reconstructed pixel samples of the adjacent CU and partially pre-decoded reconstructed pixel samples of the current CU, for example, whether they belong to continuous-tone contents or discontinuous-tone contents. The predictive and matching manner partial identification code may also be blank, and under such a condition, the decoding manner adopted for the current CU is determined independently according to the analytical evaluation result of the characteristics of the current CU and the adjacent CU.

### Exemplary embodiment 7: compressed bitstream including a predictive or matching mode flag bit and a predictive or matching mode identification code and partial identification code

A CU, i.e. a CU part, in the compressed bitstream consists of syntax elements loaded with the following information:
a CU header, a predictive and matching manner flag bit or blank, a predictive and matching manner identification code or a predictive and matching manner partial identification code or blank, the predictive or matching mode flag bit, the predictive or matching mode identification code or the predictive or matching mode partial identification code or blank, motion vector 1 or matching position 1, unmatched pixel sample 1, motion vector 2 or matching position 2, unmatched pixel sample 2, ......, more motion vectors or matching positions, more unmatched pixel samples, predictive residuals or matching residuals and other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header and the syntax element predictive or matching mode flag bit may also not exist in compressed bitstream data of a certain CU.

If the predictive and matching manner flag bit is blank, it is implicitly indicated that the predictive and matching manner flag bit is a preset fixed value.

A value of the predictive or matching mode flag bit may be 1 or 0.

If the value of the predictive or matching mode flag bit is 1, the syntax element predictive or matching mode identification code also exists in the compressed bitstream (but the syntax element predictive or matching mode partial identification code does not exist), and the predictive or matching mode identification code may take C code values, and may independently determine a predictive or matching mode adopted for decoding the current CU.

If the value of the predictive or matching mode flag bit is 0, the syntax element predictive or matching mode partial identification code also exists in the compressed bitstream (but the syntax element predictive or matching mode identification code does not exist), the predictive or matching mode partial identification code may take D (D<C) code values, the code value of the predictive or matching mode partial identification code may not independently determine the predictive or matching mode adopted for decoding the current CU, and is required to be combined with an analytical evaluation result of characteristics of the current CU and an adjacent CU to determine the predictive or matching mode adopted for decoding the current CU. The characteristics of the current CU and the adjacent CU, for example, include: a decoding manner, predictive or matching mode, motion vectors and matching positions of the adjacent CU, characteristics of a result of obtained by performing partial pre-decoding on the current CU by a plurality of decoding manners or all of A decoding manners and characteristics of decoded reconstructed pixel samples of the adjacent CU and partially pre-decoded reconstructed pixel samples of the current CU, for example, whether they belong to continuous-tone contents or discontinuous-tone contents. The predictive or matching mode partial identification code may also be blank, and under such a condition, the predictive or matching mode adopted for decoding the current CU is determined independently according to the analytical evaluation result of the characteristics of the current CU and the adjacent CU.

Exemplary embodiment 8: compressed bitstream including a predictive or matching mode flag bit and a predictive or matching mode identification code and partial identification code during adoption of 4 decoding manners

A CU, i.e. a CU part, in the compressed bitstream consists of syntax elements loaded with the following information:
a CU header, a predictive and matching manner flag bit or blank, a predictive and matching manner identification code or a predictive and matching manner partial identification code or blank, the predictive or matching mode flag bit, the predictive or matching mode identification code or the predictive or matching mode partial identification code or blank, motion vector 1 or displacement vector 1 or (displacement vector 1, matching length 1) or index map 1, unmatched pixel sample 1, motion vector 2 or displacement vector 2 or (displacement vector 2, matching length 2) or index map 2, unmatched pixel sample 2, ......, more motion vectors or displacement vectors or (displacement vector, matching length) or index maps, more unmatched pixel samples, predictive residuals or matching residuals and other coding results.

Placement positions of all the other syntax elements except the syntax element CU header in the bitstream are not unique, and any reasonable predetermined sequence may be adopted. Any syntax element may also be split into a few parts, and the parts may be placed in the same place in the bitstream in a centralized manner, and may also be placed in different places in the bitstream respectively. Any syntax elements may also be combined into one syntax element. The other syntax elements except the syntax element CU header may also not exist in compressed bitstream data of a certain CU.

A value of the predictive and matching manner flag bit may be 1 or 0.

If the predictive and matching manner flag bit is blank, it is implicitly indicated that the predictive and matching manner flag bit is a preset fixed value.

A value of the predictive or matching mode flag bit may be 1 or 0.

If the predictive or matching mode flag bit is blank, it is implicitly indicated that the predictive or matching mode flag bit is a preset fixed value.

In another embodiment, software is further provided, which is configured to execute the technical solutions described in the abovementioned embodiments and exemplary implementation modes.

In another embodiment, a storage medium is further provided, in which the abovementioned software is stored, the storage medium including, but not limited to: a compact disc, a floppy disk, a hard disk, an erasable memory and the like.

From the above, the embodiments of the present disclosure achieve technical effects as follows: the problem that there is yet no technical solution which can perform high-efficiency coding or high-efficiency decoding for a screen in the related technology is solved, and multiple decoding manners may further be combined to decode a decoding unit to rapidly and efficiently implement a coding or decoding process.

It is important to note that terms "first", "second" and the like in the specification, claims and drawings of the present disclosure are configured to distinguish similar objects, and are not required to describe specific orders or sequences. It should be understood that the objects used in such a manner may be exchanged to make it possible to implement the described embodiments of the present disclosure in sequences except those shown or described here under proper conditions. In addition, terms "include" and "have" and any transformations thereof are intended to cover exclusive inclusions, and for example, a process, method, system, product or equipment including a series of steps or units is not limited to those steps or units which are clearly listed, but may include other steps or units which are not listed or intrinsic for the process, method, product or equipment.

Obviously, those skilled in the art should know that each module of each module or step of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage device for execution with the computing devices, the shown or described steps may be executed in sequences different from those described here in some circumstances, or may form each integrated circuit module respectively, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection defined by the appended claims of the present disclosure.

### Industrial Applicability

The technical solutions of the present disclosure may be applied to an image coding or decoding process, and the technical solution of judging a coding manner which is the most proper for a current unit to be coded according to characteristics of pixel samples of the current CU to be coded and an adjacent unit of the CU is adopted, so that the problem that there is yet no technical solution which can perform high-efficiency coding or high-efficiency decoding for a screen in the related technology is solved, and multiple coding manners may further be combined to code the CU to rapidly and efficiently implement a coding or decoding process.

## Claims

1. A method for coding an image, comprising:
step 1): selecting, according to characteristics of pixel samples of a current Coding Unit, CU, and an adjacent CU of the current CU, one coding manner for predictive or matching coding of the current CU from A predetermined predictive coding manners and matching coding manners comprising at least one predictive coding manner with different prediction characteristics and matching coding manners with mutually different matching characteristics, and determining the selected coding manner as an optimal coding manner, wherein the A predictive coding manners and matching coding manners comprise: a predictive coding manner, matching coding manner 1, matching coding manner 2, ...... and matching coding manner A-1, and A is an integer more than or equal to 2; and
step 2): performing predictive coding or matching coding on the current CU by adopting the optimal coding manner.

2. The coding method as claimed in claim 1, wherein a value of A is selected from a set {3,4,5}, wherein, when A is equal to 4, the 4 coding manners comprise: the predictive coding manner, a block matching coding manner, a string matching coding manner and a palette coding manner; and when A is equal to 3, the 3 coding manners comprise: the predictive coding manner, the block matching coding manner and the string matching coding manner.

3. The coding method as claimed in claim 1, wherein
the current CU and the adjacent CU consist of syntax elements, wherein the syntax elements comprise the following information:
a CU header, a predictive and matching manner identification code and a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N is an integer more than 2.

4. The coding method as claimed in claim 3, wherein a value of the predictive and matching manner identification code comprises at least one of: 0, 1, 2, ...... and A-1, wherein it is indicated that the predictive coding manner is adopted for the current CU when the predictive and matching manner identification code is 0, it is indicated that matching coding manner 1 is adopted for the current CU when the predictive and matching manner identification code is 1, it is indicated that matching coding manner 2 is adopted for the current CU when the predictive and matching manner identification code is 2, ......, and it is indicated that matching coding manner A-1 is adopted for the current CU when the predictive and matching manner identification code is A-1.

5. The coding method as claimed in claim 1, wherein
the current CU and the adjacent CU consist of syntax elements, wherein the syntax elements comprise the following information:
a CU header, a predictive and matching manner identification code and a predictive mode or a matching mode;
motion vector 1 and/or displacement vector 1; or index map 1, unmatched pixel sample 1, motion vector 2 and/or displacement vector 2; or index map 2, unmatched pixel sample 2, ••••••, motion vector N and/or displacement vector N; or index map N and unmatched pixel sample N; and
predictive residuals or matching residuals, wherein N is an integer more than 2.

6. The coding method as claimed in claim 5, wherein a value of the predictive and matching manner identification code comprises at least one of: 0, 1, 2 and 3, wherein it is indicated that the predictive coding manner is adopted for the current CU when the predictive and matching manner identification code is 0, it is indicated that the block matching coding manner is adopted for the current CU when the predictive and matching manner identification code is 1, it is indicated that the string matching coding manner is adopted for the current CU when the predictive and matching manner identification code is 2, and it is indicated that the palette coding manner is adopted for the current CU when the predictive and matching manner identification code is 3.

7. The coding method as claimed in claim 1, wherein
the current CU and the adjacent CU consist of syntax elements, wherein the syntax elements comprise the following information:
a CU header, a predictive and matching manner identification code and a predictive mode or a matching mode;
motion vector 1 and/or displacement vector 1, unmatched pixel sample 1, motion vector 2 and/or displacement vector 2, unmatched pixel sample 2, ......, motion vector N and/or displacement vector N and unmatched pixel sample N; and
predictive residuals or matching residuals, wherein N is an integer more than 2.

8. The coding method as claimed in claim 7, wherein a value of the predictive and matching manner identification code comprises at least one of: 0, 1 and 2, wherein it is indicated that the predictive coding manner is adopted for the current CU when the predictive and matching manner identification code is 0, it is indicated that the block matching coding manner is adopted for the current CU when the predictive and matching manner identification code is 1, and it is indicated that the string matching coding manner is adopted for the current CU when the predictive and matching manner identification code is 2.

9. The coding method as claimed in any one of claims 3 to 8, wherein a position of the CU header in the syntax elements is fixedly the first in the syntax elements, and positions of the other syntax elements in a bitstream are determined according to a predetermined arrangement sequence, wherein the other syntax elements are syntax elements except the CU header in the syntax elements.

10. The coding method as claimed in any one of claims 3 to 8, wherein, for any syntax element among the syntax elements, the syntax element is split into multiple parts, and the multiple parts are placed at the same position or different positions of a bitstream.

11. The coding method as claimed in any one of claims 1 to 8, after step 2), further comprising:
step 3): performing subsequent coding operation, reconstruction operation and entropy coding operation on the current CU.

12. A method for decoding an image, comprising:
step 1): performing entropy decoding on an input bitstream, parsing data information obtained by entropy decoding, and selecting one decoding manner for predictive or matching decoding of a current Coding Unit, CU, from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A is an integer more than or equal to 2; and
step 2): performing predictive decoding operation or matching decoding operation on the current CU according to the selected predictive decoding manner or matching decoding manner.

13. The decoding method as claimed in claim 12, wherein a value of A is selected from a set {3,4,5}, wherein, when A is equal to 4, the 4 decoding manners comprise: a predictive decoding manner, a block copy decoding manner, a string copy decoding manner and a palette decoding manner; and when A is equal to 3, the 3 decoding manners comprise: the predictive decoding manner, the block copy decoding manner and the string copy decoding manner.

14. The decoding method as claimed in claim 12, wherein
the current CU and the adjacent CU consist of syntax elements, wherein the syntax elements comprise the following information:
a CU header, a predictive and matching manner identification code and a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N is an integer more than 2.

15. The decoding method as claimed in claim 14, wherein a value of the predictive and matching manner identification code comprises at least one of: 0, 1, 2, ...... and A-1, wherein it is indicated that the predictive decoding manner is adopted for the current CU when the predictive and matching manner identification code is 0, it is indicated that matching decoding manner 1 is adopted for the current CU when the predictive and matching manner identification code is 1, it is indicated that matching decoding manner 2 is adopted for the current CU when the predictive and matching manner identification code is 2, ......, and it is indicated that matching decoding manner A-1 is adopted for the current CU when the predictive and matching manner identification code is A-1.

16. The decoding method as claimed in claim 12, wherein
the current CU and the adjacent CU consist of syntax elements, wherein the syntax elements comprise the following information:
a CU header, a predictive and matching manner identification code and a predictive mode or a matching mode;
motion vector 1 and/or displacement vector 1; or index map 1, unmatched pixel sample 1, motion vector 2 and/or displacement vector 2; or index map 2, unmatched pixel sample 2, ••••••, motion vector N and/or displacement vector N; or index map N and unmatched pixel sample N; and
predictive residuals or matching residuals, wherein N is an integer more than 2.

17. The decoding method as claimed in claim 16, wherein a value of the predictive and matching manner identification code comprises at least one of: 0, 1, 2 and 3, wherein it is indicated that the predictive decoding manner is adopted for the current CU when the predictive and matching manner identification code is 0, it is indicated that the block copy decoding manner is adopted for the current CU when the predictive and matching manner identification code is 1, it is indicated that the string copy decoding manner is adopted for the current CU when the predictive and matching manner identification code is 2, and it is indicated that the palette decoding manner is adopted for the current CU when the predictive and matching manner identification code is 3.

18. The decoding method as claimed in claim 12, wherein
the current CU and the adjacent CU consist of syntax elements, wherein the syntax elements comprise the following information:
a CU header, a predictive and matching manner identification code and a predictive mode or a matching mode;
motion vector 1 or displacement vector 1; or position vector 1 and matching length 1, unmatched pixel sample 1, motion vector 2 or displacement vector 2; or position vector 2 and matching length 2, unmatched pixel sample 2, ••••••, motion vector N and/or displacement vector N; or position vector N and matching length N, and unmatched pixel sample N; and
predictive residuals or matching residuals, wherein N is an integer more than 2.

19. The decoding method as claimed in claim 18, wherein a value of the predictive and matching manner identification code comprises at least one of: 0, 1 and 2, wherein it is indicated that the predictive decoding manner is adopted for the current CU when the predictive and matching manner identification code is 0, it is indicated that the block copy decoding manner is adopted for the current CU when the predictive and matching manner identification code is 1, and it is indicated that the string copy decoding manner is adopted for the current CU when the predictive and matching manner identification code is 2.

20. The decoding method as claimed in claim 12, wherein
the current CU and the adjacent CU consist of syntax elements, wherein the syntax elements comprise the following information:
a CU header, a predictive and matching manner flag bit, a predictive and matching manner identification code or a predictive and matching manner partial identification code; or blank, a predictive mode or a matching mode;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N is an integer more than 2.

21. The decoding method as claimed in claim 20, further comprising that:
when the predictive and matching manner flag bit is 0, it is indicated that syntax elements forming CUs of the bitstream comprise one of: a predictive and matching manner partial identification code which is not blank; and a predictive and matching manner partial identification code which is blank; and
when the predictive and matching manner flag bit is 1, it is indicated that the syntax elements forming the CUs of the bitstream comprise the predictive and matching manner identification code.

22. The decoding method as claimed in claim 21, further comprising:
when the syntax elements forming the CUs of the bitstream comprise a predictive and matching manner partial identification code and the predictive and matching manner partial identification code is not blank, determining the decoding manner adopted for the current CU according to the predictive and matching manner partial identification code and an evaluation result of the characteristics of the pixel samples of the current CU and the adjacent CU; and
when the syntax elements forming the CUs of the bitstream comprise a predictive and matching manner partial identification code and the predictive and matching manner partial identification code is blank, determining the decoding manner adopted for the current CU according to the evaluation result of the characteristics of the pixel samples of the current CU and the adjacent CU.

23. The decoding method as claimed in claim 12, wherein
the current CU and the adjacent CU consist of syntax elements, wherein the syntax elements comprise the following information:
a CU header, a predictive and matching manner flag bit or blank, a predictive and matching manner identification code or a predictive and matching manner partial identification code; or blank, a predictive or matching mode flag bit, a predictive or matching mode identification code or a predictive or matching mode partial identification code or blank;
motion vector 1 or matching position 1, unmatched pixel sample 1, motion vector 2 or matching position 2, unmatched pixel sample 2, ......, motion vector N or matching position N and unmatched pixel sample N; and
predictive residuals or matching residuals, wherein N is an integer more than 2.

24. The decoding method as claimed in claim 23, wherein
when the predictive and matching manner flag bit is blank, the predictive and matching manner flag bit is set to be a preset fixed value;
when a value of the predictive or matching mode flag bit is 1, it is indicated that syntax elements forming CUs of the bitstream comprise the predictive and matching mode identification code, and the decoding manner for the current CU is determined according to a value corresponding to the predictive and matching mode identification code; and
when the value of the predictive or matching mode flag bit is 0, it is indicated that syntax elements forming CUs of the bitstream comprise a predictive and matching mode partial identification code which is not blank, or a predictive and matching mode partial identification code which is blank.

25. The decoding method as claimed in claim 24, further comprising:
when the syntax elements forming the CUs of the bitstream comprise a predictive and matching mode partial identification code and the predictive and matching mode partial identification code is not blank, determining the decoding manner adopted for the current CU according to the predictive and matching mode partial identification code and an evaluation result of the characteristics of the pixel samples of the current CU and the adjacent CU; and
when the syntax elements forming the CUs of the bitstream comprise a predictive and matching mode partial identification code and the predictive and matching mode partial identification code is blank, determining the decoding manner adopted for the current CU according to the evaluation result of the characteristics of the pixel samples of the current CU and the adjacent CU.

26. The decoding method as claimed in claim 12, wherein
the current CU and the adjacent CU consist of syntax elements, wherein the syntax elements comprise the following information:
a CU header, a predictive and matching manner flag bit or blank, a predictive and matching manner identification code or a predictive and matching manner partial identification code; or blank, the predictive or matching mode flag bit or blank, the predictive or matching mode identification code or the predictive or matching mode partial identification code or blank;
motion vector 1 and/or displacement vector 1; or index map 1, unmatched pixel sample 1, motion vector 2 and/or displacement vector 2; or index map 2, unmatched pixel sample 2, ••••••, motion vector N and/or displacement vector N; or index map N and unmatched pixel sample N; and
predictive residuals or matching residuals, wherein N is an integer more than 2.

27. The decoding method as claimed in claim 26, wherein
when the predictive and matching manner flag bit is not blank, a value of the predictive and matching manner flag bit is set to be 0 or 1;
when the predictive and matching manner flag bit is blank, the value of the predictive and matching manner flag bit is set to be a preset fixed value;
when the predictive and matching mode flag bit is not blank, a value of the predictive and matching mode flag bit is set to be 0 or 1; and
when the predictive and matching mode flag bit is blank, the value of the predictive and matching mode flag bit is set to be a preset fixed value.

28. The decoding method as claimed in any one of claims 14 to 27, wherein a position of the CU header in the syntax elements is fixedly the beginning of the CU in the syntax elements, and positions of the other syntax elements in the bitstream are determined according to a predetermined arrangement sequence, wherein the other syntax elements are syntax elements except the CU header in the syntax elements.

29. The decoding method as claimed in any one of claims 14 to 27, wherein, for any syntax element among the syntax elements, the syntax element is split into multiple parts, and the multiple parts are placed at the same position or different positions of a bitstream.

30. A method for coding an image, comprising:
analyzing characteristics of pixel samples of a coding block and an adjacent block of the coding block;
determining an optimal coding manner applicable to the coding block according to an analysis result; and
coding the coding block according to the optimal coding manner.

31. The coding method as claimed in claim 30, wherein analyzing the characteristics of the coding block and the adjacent block of the coding block comprises:
analyzing the characteristics of the coding block to obtain palette parameters for the coding block; and
analyzing characteristics of partially or completely reconstructed pixel samples in the adjacent block according to the palette parameters to obtain the analysis result.

32. The coding method as claimed in claim 31, wherein analyzing the characteristics of the partially or completely reconstructed pixel samples in the adjacent block according to the palette parameters to obtain the analysis result comprises:
converting the reconstructed pixel samples according to the palette parameters, obtaining values of palette indices, and determining the values of the palette indices as the analysis result.

33. The coding method as claimed in claim 31, wherein analyzing the characteristics of the coding block and the adjacent block of the coding block to obtain the analysis result comprises:
acquiring the partially or completely reconstructed pixel samples in the adjacent block, and determining copy values of the reconstructed pixel samples as the analysis result.

34. The coding method as claimed in claim 30, wherein determining the optimal coding manner applicable to the coding block according to the analysis result comprises:
determining the optimal coding manner applicable to the coding block from multiple coding manners, wherein the multiple coding manners comprise at least one of: a predictive coding manner, a block matching coding manner, a string matching coding manner and a palette coding manner.

35. The coding method as claimed in claim 32, wherein, when the optimal coding manner is the palette coding manner, coding the coding block according to the optimal coding manner comprises:
coding the coding block according to the palette parameters and the analysis result.

36. The coding method as claimed in claim 35, after coding the coding block according to the palette parameters and the analysis result, further comprising:
writing palette decoding parameters comprising the palette parameters into a bitstream corresponding to the coding block.

37. A method for decoding an image, comprising:
parsing a bitstream to obtain decoding parameters of a decoding block in the bitstream;
analyzing characteristics of an adjacent block of the decoding block; and
decoding the decoding block according to a decoding manner determined according to the decoding parameters and an analysis result of the adjacent block.

38. The decoding method as claimed in claim 37, wherein, when the decoding parameters comprise parameters for palette decoding manner, analyzing characteristics of the adjacent block of the decoding block comprises:
analyzing characteristics of partially or completely reconstructed pixel samples in the adjacent block to obtain the analysis result, and determining values of palette indices obtained by converting the reconstructed pixel samples according to the parameters for palette decoding manner or copy values of the reconstructed pixel samples as the analysis result.

39. The decoding method as claimed in claim 38, wherein decoding the decoding block according to the decoding manner determined according to the decoding parameters and the analysis result comprises:
decoding the decoding block according to the analysis result by the decoding manner indicated by the parameters for palette decoding manner.

40. The decoding method as claimed in any one of claims 37 to 39, wherein the decoding manner comprises at least one of: a predictive decoding manner, a block copy decoding manner, a string copy decoding manner and a palette decoding manner.

41. A device for coding an image, comprising:
a selection module, configured to select, according to characteristics of pixel samples of a current Coding Unit, CU, and an adjacent CU of the current CU, one coding manner for predictive or matching coding of the current CU from A predetermined predictive coding manners and matching coding manners comprising at least one predictive coding manner with different prediction characteristics and matching coding manners with mutually different matching characteristics, and determine the selected coding manner as an optimal coding manner, wherein the A predictive coding manners and matching coding manners comprise: a predictive coding manner, matching coding manner 1, matching coding manner 2, ...... and matching coding manner A-1, and A is an integer more than or equal to 2; and
a coding module, configured to perform predictive coding or matching coding on the current CU by adopting the optimal coding manner.

42. The coding device as claimed in claim 41, wherein, for coding manner selection of the selection module: a value of A is selected from a set {3,4,5}, wherein, when A is equal to 4, the 4 coding manners comprise: the predictive coding manner, a block matching coding manner, a string matching coding manner and a palette coding manner; and when A is equal to 3, the 3 coding manners comprise: the predictive coding manner, the block matching coding manner and the string matching coding manner.

43. A device for decoding an image, comprising:
an acquisition module, configured to perform entropy decoding on an input bitstream, and parse data information obtained by entropy decoding;
a selection module, configured to select one decoding manner for predictive or matching decoding of a current Coding Unit, CU, from A predictive decoding manners and matching decoding manners comprising at least one predictive decoding manner with different prediction characteristics and matching decoding manners with mutually different matching characteristics according to one of the following factors: the data information; and the data information and an analysis result obtained by analyzing characteristics of pixel samples of the current CU and an adjacent CU, wherein A is an integer more than or equal to 2; and
a decoding module, configured to perform predictive decoding operation or matching decoding operation on the current CU according to the selected predictive decoding manner or matching decoding manner.

44. The decoding device as claimed in claim 43, wherein, for decoding manner selection of the selection module: a value of A is selected from a set {3,4,5}, wherein, when A is equal to 4, the 4 decoding manners comprise: a predictive decoding manner, a block copy decoding manner, a string copy decoding manner and a palette decoding manner; and when A is equal to 3, the 3 decoding manners comprise: the predictive decoding manner, the block copy decoding manner and the string copy decoding manner.

45. A device for coding an image, comprising:
an analysis module, configured to perform characteristic analysis on pixel samples of a coding block and an adjacent block of the coding block;
a determination module, configured to determine an optimal coding manner applicable to the coding block according to an analysis result; and
a coding module, configured to code the coding block according to the optimal coding manner.

46. The coding device as claimed in claim 45, wherein the analysis module comprises:
an acquisition unit, configured to perform characteristic analysis on the coding block to obtain palette parameters of the coding block; and
an analysis unit, configured to analyze characteristics of partially or completely reconstructed pixel samples in the adjacent block according to the palette parameters to obtain the analysis result.

47. The coding device as claimed in claim 46, wherein the analysis unit comprises:
a conversion subunit, configured to convert the reconstructed pixel samples according to the palette parameters; and
an acquisition subunit, configured to obtain values of palette indices and determine the values of the palette indices as the analysis result.

48. The coding device as claimed in claim 46, wherein the acquisition unit is further configured to acquire the partially or completely reconstructed pixel samples in the adjacent block, and determine copy values of the reconstructed pixel samples as the analysis result.

49. The coding device as claimed in claim 45, wherein the determination module is further configured to determine the optimal coding manner applicable to the coding block from multiple coding manners, wherein the multiple coding manners comprise at least one of: a predictive coding manner, a block matching coding manner, a string matching coding manner and a palette coding manner.

50. The coding device as claimed in claim 49, wherein, when the optimal coding manner is the palette coding manner, the coding module is further configured to code the coding block according to the palette parameters and the analysis result.

51. The coding device as claimed in claim 50, further comprising:
a writing module, configured to write palette decoding parameters comprising the palette parameters into a bitstream corresponding to the coding block.

52. A device for decoding an image, comprising:
a parsing module, configured to parse a bitstream to obtain decoding parameters of a decoding block in the bitstream;
an analysis module, configured to analyze characteristics of an adjacent block of the decoding block; and
a decoding module, configured to decode the decoding block according to a decoding manner determined according to the decoding parameters and an analysis result.

53. The decoding device as claimed in claim 52, wherein, when the decoding parameters comprise parameters for palette decoding manner, the analysis module is further configured to analyze characteristics of partially or completely reconstructed pixel samples in the adjacent block to obtain the analysis result, wherein values of a palette indices obtained by converting the reconstructed pixel samples according to the parameters for palette decoding manner or copy values of the reconstructed pixel samples are determined as the analysis result.

54. The decoding device as claimed in claim 53, wherein the decoding module is further configured to decode the decoding block according to the analysis result by the decoding manner indicated by the parameters for palette decoding manner.
